# DEMANDE DE BREVET EUROPEEN

(11) **EP 1 605 420 A2**
(43) Date de publication de la demande: **14.12.2005**
(21) Numéro de dépôt: 05291204.5
(22) Date de dépôt: 06.06.2005
(51) Int. Cl.: G09B 7/00

(54) **Système de formation à l'exploitation, l'utilisation ou la maintenance d'un cadre de travail dans un environnement de realité virtuelle**

(30) Priorité: 09.06.2004 FR 0406228; 09.06.2004 FR 0406229; 09.06.2004 FR 0406230; 09.06.2004 FR 0406231
(71) Demandeur: GIAT Industries, 78000 Versailles (FR)
(72) Inventeur: Mollet, Nicolas, 35270 Meillac (FR); Cazeaux, Eric, 31550 Cintegabelle (FR); Devillers, Frédéric, 29200 Brest (FR); Maffre, Eric, 29280 Loc Maria Plouzané (FR); Arnaldi, Bruno, 35000 Rennes (FR); Tisseau, Jacques, 29200 Brest (FR)
(74) Mandataire: Célanie, Christian

(57) **Abrégé**

L'invention concerne un système de formation à l'exploitation, l'utilisation ou la maintenance d'un cadre de travail 51, comprenant un module de réalité virtuelle 52 modélisant ledit cadre de travail 51 et ses caractéristiques tridimensionnelles physiques et comportementales par des objets virtuels 53 autonomes et réactifs, une interface homme machine 54 permettant à un apprenant 55 d'être mis en situation et d'interagir avec le cadre de travail 51 simulé au cours d'une session de formation 56.

Il comprend un module de scénarisation 57 modélisant les actions que doit réaliser l'apprenant 55 pour atteindre l'objectif pédagogique consistant à la réalisation d'une tâche complexe et assurant le suivi et le contrôle des actions réalisées par l'apprenant 55.

Application du système dans une méthode de construction d'une session de formation.

## Description

Le secteur technique de la présente invention est celui des systèmes de formation construits autour d'un environnement de réalité virtuelle.

Il est connu d'utiliser la réalité virtuelle pour modéliser un environnement ou des objets. On s'attache à modéliser les objets du monde réel par des objets virtuels. Ces objets réels présentent des propriétés intrinsèques : position, orientation, matériau, forme, volume, couleur, masse, inertie, dureté... etc. Ces objets peuvent interagir entre eux selon des relations réelles : contact, support, fixation, assemblage vissé... La modélisation s'attache à modéliser les objets dans leurs propriétés intrinsèques ainsi que dans leur comportement propre ou en interaction avec d'autres objets.

Il est connu de même de permettre à un opérateur de pénétrer dans ce monde virtuel ainsi modélisé, au moyen d'un opérateur virtuel, afin d'y prendre place et de pouvoir interagir avec les objets virtuels de ce monde. La perception principale de ce monde dont dispose l'opérateur est visuelle. Il peut s'agir d'une vision classique, telle une fenêtre sur le monde virtuel, représentée sur un écran, ou d'une immersion où l'opérateur réel voit ce que verrait l'opérateur virtuel qui le représente dans le monde virtuel.

Il est connu encore de représenter chacun de ces objets réels par un objet virtuel reprenant les caractéristiques et les comportements de l'objet réel. On s'attache tout particulièrement à modéliser les caractéristiques et les comportements physiques (géométrie, aspect, contacts, positionnement relatif, déplacements, gravité...). Lorsqu'on traite de la modélisation des relations ou interactions entre ces objets et de la modélisation de l'opérateur, plusieurs approches existent.

L'approche manuelle consiste à définir individuellement chaque interaction. Ceci peut être réalisé par programmation combinatoire. Chaque configuration de relation possible est traitée par un programme dédié. La qualité du processus global est alors directement liée à la qualité de l'expertise du programmeur et à sa capacité d'appréhender la complexité de l'environnement. Le programmeur gère manuellement la combinatoire des interactions, généralement par des enchaînements de tests multiples, qui valident le déclenchement d'une action, puis réalisent ce déclenchement. La nécessaire gestion manuelle de la combinatoire constitue un inconvénient per se, qui entraîne un manque de génération dans la spécification des interactions. Chaque modification
ou complément, remet en cause l'ensemble de l'édifice, et peut conduire à l'effondrement total. La stabilité du processus complet n'est aucunement garantie.

Une autre approche, visant à systématiser le traitement des relations entre les objets, est l'utilisation de Représentations d'Actions Paramétriques (RAP ou PAR en anglais) développée par Norman BADLER de l'université de Pennsylvanie (EUA). Dans cette approche, les PAR permettent une description des interactions réalisables entre un agent humanoïde (opérateur) et des objets virtuels. Le système comprend un ensemble de PAR, parmi lequel est recherché celui qui permet de répondre à une commande donnée. Un PAR comprend les caractéristiques suivantes :
- l'« agent » qui va exécuter l'action
- la liste des objets virtuels qui seront concernés par l'action,
- la liste des conditions nécessairement vraies pour réaliser l'action,
- des spécifications préparatoires (Preparatory Specifications), listant des couples (condition, action) qui prépare l'action principale du PAR,
- la description de l'action,
- la liste des conditions pour terminer l'action,
- des assertions postérieures (Post Assertions), décrivant les effets pour mettre à jour la base de données à la fin de l'action.

Cette approche, si elle a le mérite de poser une base de systématisation du traitement des relations entre objets virtuels, présente l'inconvénient majeur de ne traiter que des interactions potentielles entre des objets virtuels et un humanoïde virtuel.

Une autre approche, dite des objets intelligents (Smart Objects en anglais), développée dans la thèse auprès de l'Ecole Polytechnique Fédérale de Lausanne de Marcello Kallmann, propose une manière de décrire les interactions entre un humanoïde et des objets. Le principe fondamental consiste à déporter l'information sur les interactions ou relations dans l'objet virtuel. L'objet comprend alors :
- une description des propriétés de l'objet,
- les informations d'interactions avec l'agent,
- le comportement de l'objet en réaction à chaque interaction,
- le comportement attendu de l'agent pour l'interaction,

Cette approche présente l'inconvénient majeur de ne traiter que des interactions potentielles entre des objets virtuels et un humanoïde virtuel. Une autre difficulté provient du fait que l'information d'interaction étant répartie au sein des différents objets interagissant, il peut être délicat de décrire une interaction. Certaines interactions se décrivent beaucoup plus facilement à l'aide d'un opérateur centralisé agissant sur le ou les objets en interaction.

Une autre approche, dite du simulateur mécanique, permet de gérer des interactions entre plusieurs objets. On cite par exemple un détecteur de collision centralisé qui aura pour but de tester et d'informer si des objets sont en collision. Un autre simulateur centralisé permettra de gérer une évolution sur l'inertie des objets en mouvement, afin de simuler ces mouvements relatifs des objets virtuels ou encore de gérer des contraintes mécaniques liants des objets virtuels. L'approche de ces simulateurs se caractérise par un opérateur centralisé ayant une vision globale de l'ensemble de l'environnement. Ces simulateurs doivent disposer des informations suffisantes sur les objets en jeu dans l'interaction.

L'inconvénient majeur de cette approche réside dans le fait que dans un environnement virtuel, la diversité des types d'interaction ne permet pas de les gérer exclusivement par des simulateurs mécaniques centralisés.

Une autre approche est celle dite des interacteurs. Cette approche décrite dans les travaux de T. Duval visent à fournir une manière générique de décrire les interactions entre des objets virtuels. L'opérateur interagit avec le monde virtuel uniquement au travers d'un avatar. Ce dernier est traité comme tout objet virtuel. Pour que deux objets puissent interagir entre eux, ils doivent disposer du même protocole de communication. Ce protocole de communication vient entourer un objet sans le modifier. L'interaction est décrite au travers du protocole. Un même objet peut avantageusement cumuler plusieurs protocoles. Ceci offre la possibilité pour un objet de devenir multi-interactif. Cette approche présente l'inconvénient majeur de ne traiter que des interactions potentielles entre des objets virtuels et un humanoïde virtuel.

L'état de la technique de la modélisation des objets et relations présente des inconvénients. Certaines approches distinguent l'opérateur virtuel des autres objets virtuels. Ceci constitue un traitement particulier limitatif. Le principe des objets intelligents peut être étendu en ne s'appliquant pas seulement à un opérateur pilote, mais à un objet pilote. Ceci entraîne cependant d'autres problèmes de traitements spécifiques, selon le type d'objet pilote. De plus, cette technique conduit à une complexité de la description des interactions. Enfin, le choix de l'objet pilote reste arbitraire notamment dans le cas d'une interaction fortement combinée. La ou les approches centralisées présentent l'avantage d'assurer la cohérence et de bien s'appliquer aux interactions mécaniques. Elles présentent l'inconvénient de devenir difficile à décrire dans la plupart des cas et de très mal réagir à des modifications locales, principalement dans les situations d'émergence de cas non prévus. Les protocoles d'interaction, (approche interacteur) posent le problème de la localisation de l'interaction, lorsque celle-ci est fortement combinée. Il est possible de la retrouver dans le protocole, mais celui-ci est réparti entre les objets.

Sur un autre plan, les méthodes de modélisation ainsi réalisées sont peu modulaires, difficilement augmentables et peu stables. Une modification locale peut remettre en cause l'existant et entraîner un dysfonctionnement. Il en résulte une faible capitalisation de l'acquis lors d'un développement. La combinatoire des interactions, exponentielle en fonction du nombre d'objets virtuels, est difficilement compatible avec un traitement efficace. Ces méthodes font trop souvent apparaître un cas particulier en différentiant l'humain opérateur des autres objets de l'environnement.

Pour réaliser une scénarisation de session d'apprentissage destinée à la formation d'un opérateur humain, il est connu de représenter les possibilités d'actions offertes à l'opérateur sous la forme d'enchaînements d'actions à réaliser par l'opérateur, ces enchaînements pouvant être relativement complexes.

La description des enchaînements s'effectue jusqu'à présent selon différentes méthodes que l'on peut classer suivant trois niveaux, de difficulté croissante. Au premier niveau, il est connu des langages graphiques : Grafcet, StateCharts, automate à jetons. Ces langages se caractérisent par une facilité de compréhension, mais souffrent d'un pouvoir d'expression réduit. Au second niveau, il est connu des langages dédiés aux automates et à la scénarisation : SLURGH, HTPS++. Ces langages se caractérisent par un pouvoir d'expression plus important, mais nécessitent un apprentissage afin d'être compréhensibles et utilisables. Au troisième niveau, il est connu des langages de programmation : C++, oRis. Ces langages offrent un pouvoir d'expression fort, mais nécessitent un apprentissage de la programmation, ce qui en réserve l'usage aux seuls informaticiens. De plus, certains de ces langages sont compilés. Si l'on souhaite pouvoir éditer dynamiquement les enchaînements ou le contenu des étapes, il est nécessaire de disposer d'un langage interprété.

La construction, par un formateur connaissant le domaine, d'une session de formation nécessite la construction d'un cadre de travail et la construction d'un scénario. Il est connu pour la construction d'un cadre de travail, des méthodes d'édition d'un modèle textuel du monde. Ce modèle, comprend les objets ainsi que tous leurs paramètres géométriques, positionnels ou comportementaux. Cette édition peut selon le langage de description utilisé s'avérer très complexe et très fastidieuse. Ceci est particulièrement vrai pour les aspects dimensionnels ou positionnels, en l'absence d'une représentation graphique. Il est connu pour la construction d'un scénario différentes méthodes applicables à la définition d'un graphe. Il existe des langages de description textuelle de graphes. Une première méthode connue consiste à éditer cette représentation textuelle. Ceci est fastidieux, et s'effectue sans aucun retour visuel de l'agencement des enchaînements d'étapes. Il existe une représentation graphique du graphe. Une édition graphique est possible et permet de mieux se figurer mentalement l'agencement des enchaînements. Il convient cependant d'effectuer un travail important de transposition d'un enchaînement d'actions sous forme d'un graphe.

Dans le cadre d'une pédagogie classique où le formateur est en contact direct avec l'apprenant, il utilise avec profit des techniques lui permettant de connaître l'intention de l'apprenant avant et après l'exécution d'une action sur la voie d'une résolution de problème. Le formateur est toujours en interaction avec l'apprenant et pose régulièrement des questions soit a priori : « que veux-tu faire ? », soit a posteriori : «que voulais-tu faire ?». Le formateur surveille la progression de l'apprenant dans son exercice et tente de comprendre le plan d'action de l'apprenant, afin de comprendre l'intention qui a provoqué l'erreur. L'immersion dans un environnement virtuel éloigne le formateur de l'apprenant et interdit une telle approche par questionnement direct.

Un environnement de réalité virtuelle offre de multiples possibilités de simulation et d'interaction. L'utilisateur peut interagir avec les objets virtuels comme il le ferait avec les objets réels, au moyen d'un avatar le représentant dans le monde virtuel. Il peut ainsi entre autres appréhender un matériel, le regarder, le prendre, tourner autour, essayer, choisir, prendre des initiatives et agir. Il est reconnu que la réalité virtuelle permet d'enrichir un outil de formation et qu'elle permet d'obtenir de meilleurs résultats qu'un outil de formation traditionnel. Il est connu différents systèmes utilisant la réalité virtuelle.

Il existe des outils de formation dédiés à une application spécifique. Ainsi on peut citer les simulateurs de vol, un outil Electricité de France (EDF) de formation au diagnostic de panne en robinetterie industrielle ou l'outil FIACRE qui permet la formation des agents de conduite de train de la société nationale des chemins de fer français (SNCF). Ces outils sont limités en ce qu'ils ne permettent de former qu'à un matériel ou cadre de travail donné (simulateur de vol) ou qu'à un unique type de tâche (EDF ou FIACRE). Il n'existe pas de moyen d'étendre leur champ d'application. Englishstudio est un système de formation comprenant un outil adapté à des non informaticiens permettant de définir une session de formation. Il est cependant limité à l'acquisition exclusive de savoir, en l'occurrence la langue anglaise. Le produit STEVE comporte un tuteur, permettant d'intervenir dans une session de formation, principalement en mode démonstratif, afin de montrer le geste correct attendu de l'apprenant. Le brevet US 5463718 enseigne une méthode de formation assistée par ordinateur. Une norme est définie à partir de réponses, indiquées par le formateur, aux questions posées à l'apprenant. Un module de logique floue analyse les réponses de l'apprenant et modifie le déroulement de la session de formation en fonction des erreurs de l'apprenant et de règles préétablies. Une session de formation peut se dérouler automatiquement en l'absence de formateur.

La présente invention permet d'éviter les différents problèmes de l'art antérieur en utilisant des méthodes particulièrement avantageuses.

L'invention vise à fournir un système de formation mettant en oeuvre la réalité virtuelle. Ce système utilise une méthode de modélisation des objets et des relations entre ces objets, et il ment en oeuvre une méthode de scénarisation de session de formation. L'invention vise également une méthode de construction intuitive d'une session de formation qui utilise un tel système.

Une modélisation des objets et des relations entre ces objets fournit une fondation pour modéliser les éléments de base. Une méthode de scénarisation, modélise les actions attendues de l'apprenant et les organise selon un scénario. Une session de formation déroule un scénario contrôlé et surveillé par un moteur de scénario. Une méthode de construction intuitive permet la définition, par un formateur, d'une session de travail comprenant un cadre de travail et un scénario. Une méthode pédagogique est décrite qui détermine et exploite une détection de l'intention de l'apprenant. L'ensemble produit un système de formation cohérent mettant en oeuvre ces méthodes dans un environnement de réalité virtuelle.

La modélisation des objets et des relations selon l'invention est particulièrement avantageuse. Elle permet d'unifier la modélisation et le traitement des objets réels et des relations qui sont tous deux modélisés par des objets virtuels. Ces objets virtuels sont hiérarchisés et comprennent des activités et des capacités. Un gestionnaire centralisé de relation assure la détection et la réalisation des interactions définies par les relations. Enfin, l'opérateur interagit au moyen d'un objet virtuel semblable aux autres objets virtuels de l'environnement, nommé avatar.

La modélisation de scénario selon la présente invention présente un langage interprété, permettant un fort pouvoir d'expression d'enchaînements complexes, tout en offrant une accessibilité d'écriture à des formateurs non informaticiens.

La méthode de construction d'une session de travail selon l'invention appliquée au cadre de travail utilise directement les interactions possibles avec les objets de l'environnement de réalité virtuelle pour définir ces objets virtuels et leurs caractéristiques. De même cette méthode de construction appliquée au scénario utilise directement l'environnement de réalité virtuelle et ses possibilités d'interactivité pour mettre en place la séquence principale d'action dudit scénario directement en réalisant ladite séquence principale d'action.

La méthode pédagogique selon l'invention, applicable dans un environnement de réalité virtuelle, permet d'obtenir des informations concernant l'intention de l'apprenant. Elle analyse ces informations, par comparaison avec l'action attendue et l'action réalisée, afin de réorienter les moyens de formation.

L'invention a donc pour objet un système de formation à l'exploitation, l'utilisation ou la maintenance d'un cadre de travail, comprenant un module de réalité virtuelle modélisant ledit cadre de travail et ses caractéristiques tridimensionnelles physiques et comportementales par des objets virtuels autonomes et réactifs, une interface homme machine permettant à un apprenant d'être mis en situation et d'interagir avec le cadre de travail simulé au cours d'une session de formation, *caractérisé en ce* qu'il comprend un module de scénarisation modélisant les actions que doit réaliser l'apprenant pour atteindre l'objectif pédagogique consistant à la réalisation d'une tâche complexe et assurant le suivi et le contrôle des actions réalisées par l'apprenant.

Selon une caractéristique du système, le module de scénarisation comprend un moteur de scénario qui assure le suivi et le contrôle du déroulement d'un scénario modélisant les actions que doit réaliser l'apprenant en fonction des actions réalisées par cet apprenant.

Selon une autre caractéristique du système, un scénario comprend un graphe constitué d'étapes modélisant des actions reliées par des liens définissant exhaustivement les enchaînements possibles entre ces étapes.

Selon encore une autre caractéristique, le graphe comprend des étapes reliées par des liens, le moteur de scénario validant les étapes et liens en fonction des événements se produisant, afin de transmettre au moyen de jetons, le contrôle aux liens ou aux étapes suivantes.

Selon encore une autre caractéristique, le graphe comprend une première étape DÉBUT comportant uniquement une sortie et une dernière étape FIN comportant uniquement une entrée.

Selon encore une autre caractéristique, une étape peut être une étape ACTION, modélisant une action attendue de l'opérateur, comportant une entrée et pouvant comporter une sortie, cette étape étant validée lorsque l'opérateur a réalisé l'action attendue.

Selon encore une autre caractéristique, une étape ACTION présente un attribut INTERDIT qui empêche sa réalisation.

Selon encore une autre caractéristique, une étape peut être une étape CALCUL contenant une formule de calcul et comportant une entrée et éventuellement une sortie.

Selon encore une autre caractéristique, une étape peut être une étape CONDITION contenant une formule booléenne et comportant une entrée et deux sorties, la première sortie étant validée lorsque la formule booléenne est évaluée à VRAI et la seconde sortie étant validée lorsque la formule booléenne est évaluée à FAUX.

Selon encore une autre caractéristique, une étape peut être une étape MACRO contenant un nouveau graphe et comportant une entrée et éventuellement une sortie.

Selon encore une autre caractéristique, un lien comporte au moins une entrée pouvant être reliée à une sortie d'étape, au moins une sortie pouvant être reliée à une entrée d'étape, au moins un connecteur permettant de déterminer la logique de transition de ce lien, un attribut d'exclusivité pouvant être EXCLUSIF ou NON EXCLUSIF et un attribut de parallélisme pouvant être STRICT ou NON STRICT.

Selon encore une autre caractéristique, la position du connecteur en amont ou en aval du lien, détermine la fonction logique réalisée par ledit lien.

Selon encore une autre caractéristique, un graphe présente une représentation textuelle, par exemple balisée, et une représentation graphique équivalentes, éditables séparément et automatiquement mises en cohérence en permanence.

Selon encore une autre caractéristique, la représentation d'un graphe est modifiable pendant son contrôle et sa surveillance par le moteur de scénario.

Selon encore une autre caractéristique, chaque graphe, chaque étape, chaque lien présente un nom unique au sein du graphe le contenant.

Selon encore une autre caractéristique, le système comprend un module de génération de session de formation interactif.

Selon encore une autre caractéristique, le module de génération de session de formation interactif comprend un éditeur interactif de cadre de travail et un éditeur interactif de scénario.

Selon encore une autre caractéristique, le système comprend un module pédagogique permettant la surveillance et le suivi de l'apprenant, ledit module pédagogique comprenant un module de détection de l'intention de l'apprenant a priori.

Selon encore une autre caractéristique, le module pédagogique comprend un outil de suivi de la progression de l'apprenant et des moyens pour intervenir sur le déroulement d'une session de formation.

Selon encore une autre caractéristique, le module de détection comprend un module de reconnaissance vocale ou bien un choix dans un menu.

Selon encore une autre caractéristique, le système comporte des moyens permettant de comparer l'intention détectée avec les actions qui doivent être réalisées par l'apprenant afin de déterminer un indicateur de pertinence.

Selon encore une autre caractéristique, le système comporte un module d'enregistrement permettant d'enregistrer une action de l'apprenant et de plus comporte des moyens permettant de comparer l'action enregistrée avec l'intention de l'apprenant précédemment détectée afin de déterminer un indicateur de cohérence.

Selon encore une autre caractéristique, le module pédagogique peut réorienter le déroulement de la session d'apprentissage en fonction des indicateurs de pertinence et/ou de cohérence.

Selon encore une autre caractéristique, le système comprend une interface formateur comportant des moyens d'observation permettant au formateur d'observer le déroulement d'une session de formation, de mesurer la progression de l'apprenant, de modifier le déroulement de la session de formation, de pouvoir interagir avec les objets du cadre de travail et de communiquer avec l'apprenant.

Selon encore une autre caractéristique, le système comprend plusieurs interfaces homme machine et des moyens internes permettant d'exécuter en parallèle plusieurs sessions de formation pour plusieurs apprenants.

Selon encore une autre caractéristique, le système comprend des moyens internes permettant à plusieurs apprenants de collaborer au sein d'un même cadre de travail.

L'invention concerne également une méthode de construction d'une session de formation dans un environnement de réalité virtuelle mettant en oeuvre un système tel que défini précédemment, caractérisée en ce qu'elle comprend une construction interactive à l'aide du système d'un scénario d'apprentissage.

Avantageusement, la méthode comprend une construction interactive à l'aide du système d'un cadre de travail.

Avantageusement encore, le cadre de travail est construit de manière interactive, en effectuant, les opérations suivantes:
- sélection d'un objet,
- dimensionnement interactif de l'objet,
- positionnement interactif de l'objet dans l'espace tridimensionnel,
- édition des caractéristiques non dimensionnelles de l'objet,
- répétition des opérations précédentes pour chaque objet jusqu'à obtenir le résultat souhaité,
- sauvegarde de l'ensemble des objets et de leurs caractéristiques dans un fichier cadre de travail.

Avantageusement encore, le scénario d'apprentissage est construit en effectuant les opérations suivantes :
- création interactive d'une séquence centrale d'actions en la réalisant,
- édition de la structure du graphe pour modifier les enchaînements,
- édition éventuelle de compléments au scénario,
- sauvegarde du graphe complet dans un fichier de scénario d'apprentissage.

Un avantage de la modélisation des objets mise en oeuvre est la modularité. Tous les éléments de l'environnement, objets ou relations sont modélisés par des objets modulaires. Ils sont ensuite combinés entre eux de manière souple et dynamique.

Un autre avantage de la méthode de modélisation selon l'invention est que les éléments ne sont pas figés. L'environnement est dit augmentable. De nouvelles propriétés peuvent être ajoutées de manière souple, sans remise en question de ce qui fonctionne déjà ou de l'ensemble de l'architecture. Une simple modification locale n'entraîne pas de problème de stabilité ou de dysfonctionnement de l'existant.

Un autre avantage de cette méthode de modélisation selon l'invention est que les développements sont capitalisables. Un objet ou une relation étant modélisé de manière intrinsèque, indépendamment du reste de l'environnement, et ne comportant pas de développement spécifique, devient facilement réutilisable.

Un autre avantage de cette méthode de modélisation selon l'invention est de permettre une auto-information du système. Le fait de décrire les relations évite le traitement au cas par cas. Il permet d'obtenir un système capable de raisonner seul pour gérer lui-même la combinaison des interactions et ainsi réduire la combinatoire de ces interactions.

Un autre avantage de cette méthode de modélisation selon l'invention est d'augmenter la génération de l'interaction en assimilant l'opérateur à un objet standard et en standardisant la relation objet/objet.

L'invention met en oeuvre une méthode de scénarisation qui permet un fort pouvoir d'expression de l'enchaînement des étapes avec de nombreuses possibilités de contrôle logique et de traitement du parallélisme strict ou non.

Un autre avantage de la méthode de scénarisation selon l'invention est d'être interprété.

Un autre avantage de la méthode de scénarisation selon l'invention est de présenter deux représentations équivalentes. La représentation graphique permet un accès ergonomique compréhensible sans formation, tandis que la représentation textuelle permet un fort pouvoir d'expression accessible à un informaticien.

Un autre avantage de la méthode de scénarisation selon l'invention est d'offrir par l'intermédiaire de la représentation textuelle, un point d'entrée pour un générateur automatique d'application.

Un avantage de la méthode de construction selon l'invention est d'utiliser directement l'environnement de réalité virtuelle pour construire le cadre de travail et le scénario.

Un autre avantage de la méthode de construction selon l'invention est de manipuler directement les objets virtuels et non pas une représentation textuelle ou graphique, nécessitant une représentation mentale intermédiaire.

Un autre avantage de la méthode de construction selon l'invention est, pour la construction du cadre de travail, de visualiser immédiatement et en permanence le résultat visuel final.

Un autre avantage de la méthode de construction selon l'invention est, pour la construction du scénario de formation, de définir simplement, en montrant ce qu'il faut faire, et donc rapidement, une partie importante du scénario.

Un autre avantage de la méthode de construction selon l'invention est d'être très intuitive et de permettre un accès à des personnels non informaticiens. Le formateur peut directement définir une session de formation sans devoir recourir à la médiation d'un programmeur.

Un avantage de la méthode pédagogique selon l'invention est de permettre d'augmenter la qualité du suivi de l'apprenant et de fournir des informations supplémentaires pour ce suivi au cours de la session de formation.

La méthode de détection de l'intention permet avantageusement de remonter aux erreurs conceptuelles dues à un schéma mental erroné, et ce avant même la réalisation de l'action.

La méthode de détection de l'intention permet avantageusement de détecter les erreurs fonctionnelles ou opérationnelles pouvant être dues à une mauvaise compréhension de l'utilisation de l'outil de simulation.

Un avantage de la méthode pédagogique selon l'invention est d'imposer à l'apprenant de réfléchir sur ce qu'il va faire en lui demandant d'expliciter son intention a priori.

Un avantage du système de formation selon l'invention est, de par l'utilisation de la réalité virtuelle, de permettre de former des apprenants à l'utilisation d'un cadre de travail cher et/ou peu disponible, sans nécessiter la présence et l'immobilisation dudit cadre de travail. Il est possible d'acquérir des compétences sans exposer l'apprenant aux dangers du cadre de travail réel ou de son environnement.

Un autre avantage du système de formation selon l'invention est de permettre son adaptation à tout type de cadre de travail.

Un autre avantage du système de formation selon l'invention est de permettre, avec un scénario, de coder et de stocker le savoir-faire du formateur, et ainsi de capitaliser les développements.

Un autre avantage du système de formation selon l'invention est de permettre, au formateur de construire des sessions de formation, directement dans le module de réalité virtuelle utilisé par l'apprenant, de manière intuitive.

Un autre avantage du système de formation selon l'invention est de fournir des outils de surveillance et de gestion de l'apprenant, permettant de différencier la pédagogie, afin de l'adapter à chaque apprenant pour la rendre plus efficace.

D'autres caractéristiques, détails et avantages de l'invention ressortiront plus clairement de la description détaillée donnée ci-après à titre indicatif en relation avec des dessins sur lesquels :
- la figure 1 représente le principe de modélisation du monde par un environnement virtuel,
- la figure 2 est une représentation schématique d'un objet virtuel,
- la figure 3 illustre le principe d'une relation virtuelle,
- la figure 4 illustre le détail d'une relation virtuelle,
- la figure 5 illustre le principe d'héritage entre objets, et
- la figure 6 présente le mode de fonctionnement du gestionnaire de relations,
- la figure 7 illustre un scénario simple,
- la figure 8 illustre un lien présentant un attribut NON STRICT,
- la figure 9 illustre un lien présentant un attribut STRICT,
- la figure 10 illustre un lien réalisant un OU logique,
- la figure 11 illustre un lien réalisant un ET logique,
- la figure 12 présente un schéma d'ensemble du système de formation selon l'invention,
- la figure 13 présente un exemple de scénario.

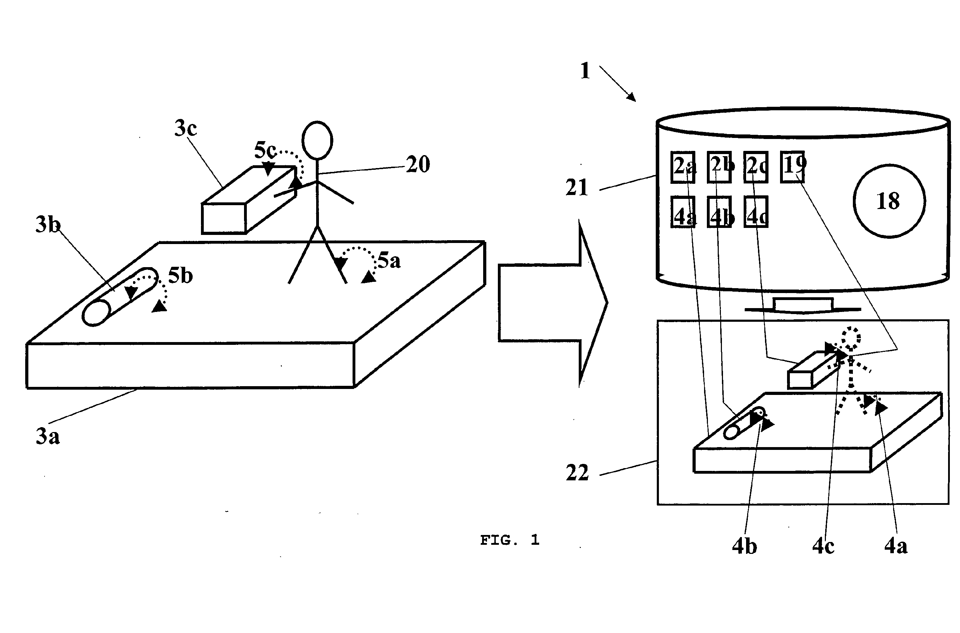

Sur la figure 1, un exemple d'environnement réel est représenté. Il comprend un opérateur réel 20 et des objets réels 3a, 3b, 3c. Il existe des relations réelles 5a, 5b, 5c entre cet opérateur réel 20 et les objets réels 3a, 3b, 3c et entre les objets réels entre eux. Ainsi par exemple, on retiendra les trois relations réelles suivantes :
- première relation 5a: l'opérateur réel 20 repose sur l'objet réel 3a,
- seconde relation 5b : l'objet réel 3b repose sur l'objet réel 3a,
- troisième relation 5c : l'opérateur réel 20 tient l'objet 3c.

Les relations ici retenues sont des relations géométriques de positionnement relatif. Elles peuvent aussi inclure des comportements de type mécanique modélisant par exemple le contact ou des efforts mutuellement exercés entre les objets. L'exposé se restreint volontairement à ces trois relations pour rester simple et illustratif. D'autres relations ou type de relations pourraient être ajoutées à volonté. Un même objet peut ainsi être impliqué dans une multitude de relations, et participer de plusieurs interactions. Le nombre de relations utilisées et la qualité de description des interactions induites augmente avec la qualité de rendu réaliste de l'environnement 1. Cette qualité est essentielle pour assurer le réalisme de la simulation comportementale de l'environnement 1. Un niveau minimum de qualité est nécessaire pour qu'un tel environnement ait de l'intérêt. Il est nécessaire que l'on puisse reconnaître des comportements de l'environnement réel dans l'environnement virtuel pour pouvoir assimiler le second au premier. Ceci est nécessaire pour que les actions simulées dans l'environnement virtuel soient utiles à renseigner sur le comportement prévisible dans l'environnement réel.

Afin de modéliser cet environnement réel, un environnement virtuel 1 est créé. Il est constitué d'enregistrements 2a, 2b, 2c, 4a, 4b, 4c, 19 dans une base de données 21. Les objets virtuels 2 correspondants à un objet réel 3a, 3b, 3c, 20 de l'environnement réel disposent de propriétés géométriques. Ils sont représentables sur une visualisation 22. L'environnement 1 comprend trois objets virtuels 2a, 2b, 2c modélisant respectivement chacun des objets réels 3a, 3b, 3c, un objet virtuel ou opérateur virtuel 19 modélisant l'opérateur réel 20 et trois objets virtuels ou relations virtuelles 4a, 4b, 4c modélisant respectivement chacune des relations réelles 5a, 5b, 5c. Une des caractéristiques essentielles de la modélisation mise en oeuvre par l'invention est d'utiliser le même formalisme de l'objet virtuel 2, que l'on détaille plus loin, pour représenter un objet réel 3 ou une relation 5. De plus l'opérateur virtuel 19 ou avatar est lui aussi modélisé par un (ou plusieurs) objet(s) virtuel(s) 2. Ainsi, les interactions de l'opérateur réel 20 sur l'environnement 1 s'effectuent par l'intermédiaire d'un avatar 19 ou opérateur virtuel 19, qui interagit avec les objets virtuels 2a, 2b, 2c de l'environnement 1 au travers de relations virtuelles 4a, 4b, 4c.

Les interactions entre des objets réels 3 sont des relations réelles 5 entre ces objets 3. La modélisation de ces interactions s'effectue aux moyens de relations virtuelles 4 dans l'environnement virtuel 1. Ces relations virtuelles 4 vont permettre de faire évoluer l'environnement 1, de modifier les objets virtuels 2, en fonction du comportement des objets modélisés par les objets 2 eux-mêmes, lorsqu'ils sont seuls concernés ou par les relations virtuelles 4, lorsque plusieurs objets virtuels 2 interagissent et en fonction des interactions initiées par l'opérateur virtuel 19 contrôlé par l'opérateur 20. L'environnement 1 est graphique en ce qu'il dispose d'une représentation visible 22. La modélisation visant à représenter un monde réel tridimensionnel et ses comportements est avantageusement tridimensionnelle. Cette modélisation est avantageusement complétée par des propriétés intrinsèques aux objets virtuels 2, modélisées au sein des objets virtuels eux-mêmes et par des propriétés faisant intervenir plusieurs objets virtuels 2 interagissant, modélisés au sein des relations virtuelles 4. Ceci confère à l'environnement 1 une dynamique lui permettant d'évoluer en fonction de règles comportementales déterministes. Cette évolution, qui tient compte de l'état instantané de chaque objet virtuel 2, va permettre en fonction des relations virtuelles 4 applicables de modifier l'état de différents objets 2. L'environnement 1 est ainsi réactif. Il est de plus interactif en ce que chaque objet 2 réagit en fonction des sollicitations qu'il subit. L'opérateur 20 peut agir au travers de l'opérateur virtuel 19, en sollicitant un ou plusieurs objets virtuels 2. Ces objets 2 réagissent en fonction des sollicitations subies et des règles de comportements prédéfinies.

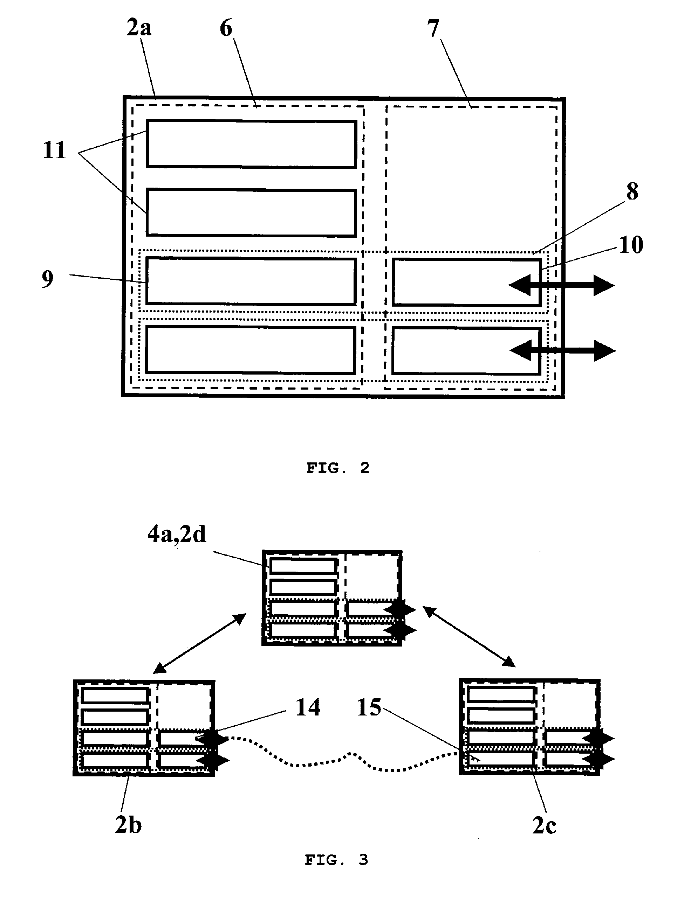

La figure 2 est un schéma d'organisation d'un objet virtuel 2 tel que mis en oeuvre par l'invention. Un tel objet virtuel 2 est un enregistrement de données et de programmes. A des fins de modularité et de protection, un objet virtuel 2 est organisé en deux parties 6, 7. La première partie 6 encore dénommée corps 6 contient tous les éléments propres à l'objet virtuel 2. Elle est située à l'intérieur de l'objet virtuel 2 et rien ni personne ne peut accéder à son contenu. La seconde partie 7 encore nommée interface 7 est la seule qui déroge à la règle précédente. Son rôle est de permettre et d'assurer la communication de l'objet virtuel 2 avec le reste de l'environnement 1. Toute communication visant à interroger, à échanger des données, à modifier l'état interne de l'objet virtuel 2 ou à utiliser un de ses services doit obligatoirement transiter par l'interface 7. Certains éléments contenus dans le corps 6 peuvent ainsi rester inaccessibles ou partiellement accessibles pour les autres objets ou opérateurs de l'environnement 1. L'objet virtuel 2 comprend des états ou données pouvant prendre des valeurs et des services ou activités 9, 11 pouvant réaliser des actions. On distingue une activité privée 11, présente dans le corps 6 et ne pouvant être sollicitée et donc ne rendre son service qu'à l'objet virtuel 2 lui-même, d'une activité publique 9 qui grâce à une interface de communication 10 située dans l'interface 7, peut aussi rendre son service à la demande d'un autre objet virtuel 2b, 2c de l'environnement 1. Une telle activité publique 9 accompagnée de son interface de communication 10 constitue ce que l'on convient d'appeler une capacité 8.

La figure 3 illustre le principe d'une relation virtuelle 4. Avec le système de formation selon l'invention, une relation virtuelle 4 est un objet virtuel 2. Sa forme reprend la forme générale d'un objet virtuel 2 tel que décrite ci-dessus. Elle comprend des activités privées 11 et des capacités 8. Son rôle est de régir à une interaction. Lorsque deux ou plus objets virtuels 2b, 2c sont amenés à interagir, la relation virtuelle intervient et assure l'intermédiaire entre ces objets virtuels. Le principe d'interaction entre ces objets virtuels 2b, 2c est exprimé dans la relation virtuelle 4a. La relation virtuelle 4a contient tous les éléments, états et actions, nécessaires à la résolution de cette interaction. La relation virtuelle 4a permet ainsi d'indiquer les conditions préalables à une interaction, permettant de la détecter et d'en vérifier la validité. Elle déroule ensuite les actions nécessaires à la réalisation de l'action modélisant l'interaction et produit les conséquences de cette dernière. Elle transmet en tant que de besoin, aux objets virtuels 2b, 2c interagissant, les différents paramètres leur permettant de réactualiser leur nouvel état résultant de l'interaction.

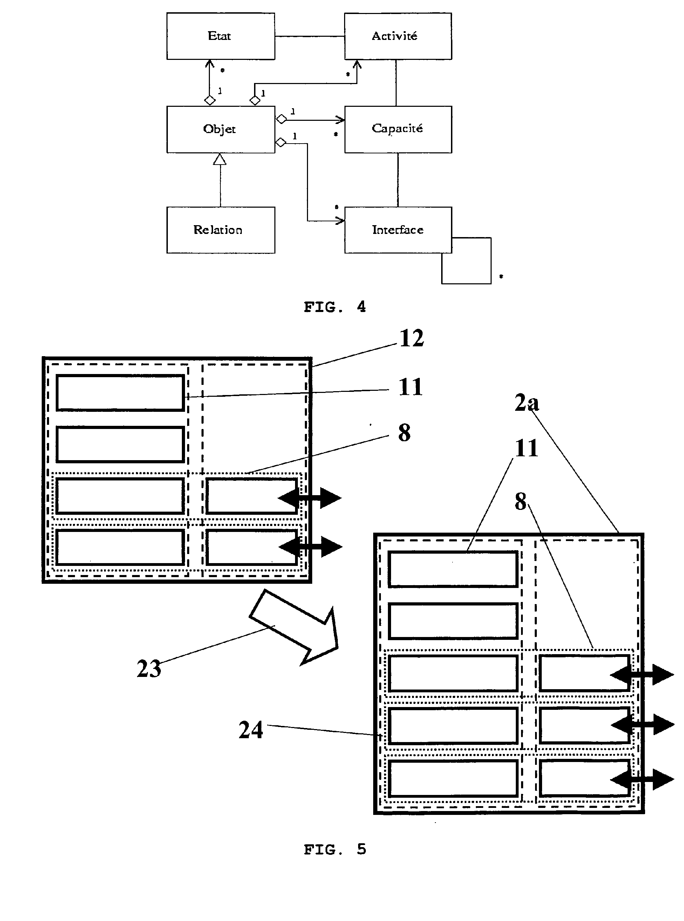

La figure 4 illustre le mode de fonctionnement d'une relation virtuelle entre deux objets et fait partie intégrante de la présente description.

La figure 5 illustre le principe d'héritage entre objets. Il est possible pour tout objet virtuel 2a d'être descendant ou encore enfant d'un objet virtuel supérieur 12 encore nommé objet parent 12. Dans ce cas, la relation d'héritage 23 permet à l'objet virtuel 2a d'hériter de l'ensemble de ses propriétés. Un tel objet enfant possède alors toutes les caractéristiques de l'objet parent. Il en reprend les états, les activités privées 11 et les capacités 8. Il est possible ensuite de particulariser l'objet enfant en lui adjoignant une ou plusieurs caractéristiques (états, activités privées
ou capacités) spécifiques 24. Ainsi, par exemple, un objet virtuel véhicule ayant été défini et présentant des caractéristiques d'état de volume, de vitesse maximale, de poids et une capacité de déplacement, pris comme parent 12, peut servir à construire, par héritage, un objet virtuel camion. Cet objet enfant reprend toutes les caractéristiques de son parent. Il peut de plus se voir adjoindre une capacité de fret.

Tous les objets virtuels 2a peuvent ainsi être hiérarchiquement liés à des objets virtuels parents 12. Avec le système de formation selon l'invention, on utilisera le formalisme des objets virtuels pour représenter les relations virtuelles. Une telle caractéristique en combinaison avec les possibilités d'héritage apporte un avantage remarquable. Une relation virtuelle 4a étant un objet virtuel 2d, comme ceux qu'elle manipule, possède des propriétés de hiérarchisation et d'héritage. Une relation virtuelle 4a peut contrôler et raisonner sur d'autres relations, et ainsi diviser son action en sous-traitances spécifiques.

Pour mettre en oeuvre l'invention, on prévoira dans l'environnement 1 un gestionnaire de relations 18 (fig. 1).

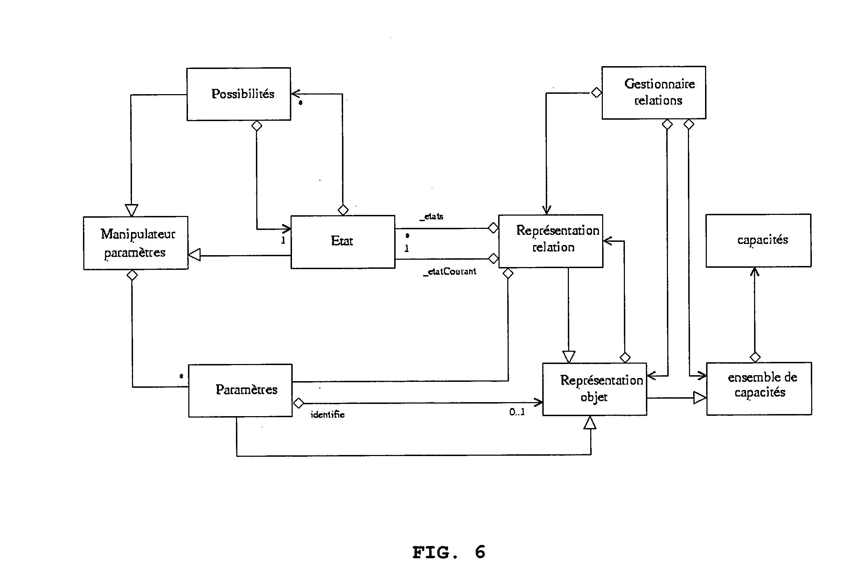

La figure 6 présente le mode de fonctionnement du gestionnaire de relations entre deux objets potentiellement interagissants et fait partie intégrante de la présente description.

Le gestionnaire de relations 18 est un processus centralisé. Le rôle du gestionnaire de relations 18 est de détecter les interactions entre les objets virtuels 2 et de suivre la réalisation de cette interaction. Pour ce faire, le gestionnaire de relations 18 utilise les caractéristiques d'interaction définies dans les relations virtuelles 4. Pour une relation donnée, le gestionnaire 18 détecte si les conditions initiales d'une interaction, définies dans la relation virtuelle 4, sont réunies et pour quels objets virtuels 2 elles sont réunies. Pour cela, le gestionnaire de relations 18 détecte, au sein des objets 2 potentiellement interagissant, des capacités associables 14, 15. Un exemple de capacités associables est pour un premier objet virtuel de posséder une capacité de vis alors qu'un second objet possède une capacité d'écrou. La détection s'effectue en effectuant pour tous les objets virtuels, l'intersection des capacités communes à ces objets. Le gestionnaire de relations 18 détermine ainsi la liste des interactions, et associe à chacune la relation virtuelle 4 correspondante pour chaque paire de capacités ainsi associables 14, 15. Dans ce cas le gestionnaire de relations 18 identifie ces deux objets comme potentiellement interagissant. Il vérifie alors que l'interaction est possible, en vérifiant que les conditions initiales sont réunies. Ici, par exemple, vérification est faite que le diamètre de la vis est compatible avec le diamètre de l'écrou et que les deux objets sont positionnés correctement en regard. L'interaction est alors possible. Si elle est souhaitable et effectivement commandée, le gestionnaire de relations 18 assure alors le déclenchement de l'interaction. L'action d'interaction 16 correspond au fait que l'interaction est exécutée conformément aux informations d'exécution présentes dans la relation virtuelle 4.

A titre illustratif, on va décrire en détail la mise en oeuvre des mécanismes génériques précédemment présentés, au moyen d'un exemple concret d'utilisation. L'exemple illustre une implémentation possible pour visser deux objets virtuels 2 entre eux. On utilise pour ce faire deux relations virtuelles 4 adaptées à cet exemple : une relation de visserie et une relation de positionnement relatif d'objets tridimensionnels.

On souhaite pouvoir visser ensemble une vis et un écrou dans un environnement tridimensionnel. Les objets, vis et écrou, ne sont connus initialement que par des fichiers décrivant leur forme tridimensionnelle. On veut interagir dans l'environnement tridimensionnel et déclencher le vissage de la vis dans l'écrou. Pour mettre en oeuvre l'invention on va considérer les modèles des objets et les modèles des relations capables de manipuler ces objets.

Il est tout d'abord recherché une relation capable de visser la vis et l'écrou conformément au souhait de l'opérateur virtuel 19. Si cette recherche est positive, alors le gestionnaire de relations 18 est en charge de transmettre cet ordre d'exécution à la relation 4 de vissage trouvée.

La recherche de relation s'effectue comme suit :
- le gestionnaire de relations 18 construit la liste de toutes les actions possibles entre ces deux objets. Il produit une liste cohérente, c'est à dire que cette liste est dépendante de l'état courant des objets. Elle représente l'ensemble des actions réalisables à l'instant de la demande de vissage, entre la vis et l'écrou,
- dans cette liste est recherchée la présence de l'action que l'on souhaite effectuer et si elle correspond bien au domaine recherché, à savoir le vissage,
- on effectue une vérification de la présence de la capacité vissage qui doit être une des capacités de la relation actuellement retenue,
- on dispose alors d'une relation de vissage capable de réaliser l'action de visser entre l'écrou et la vis. Cette action est bien certifiée valide, elle peut être déclenchée,
- le déclenchement effectue une action indiquée dans l'objet relation virtuelle,
- les états des deux objets sont modifiés en conséquence pour refléter le changement subvenu,
- la relation vissage utilise en préalable une relation de position pour faire bouger les deux objets afin de les placer en bonne condition pour pouvoir être vissés. Ce dernier point illustre l'aspect hiérarchique de la modélisation des relations.

L'utilisation d'un tel environnement de modélisation interactif 1 s'applique à tous les domaines nécessitant une simulation comportementale d'un environnement réel, cet environnement n'étant pas nécessairement disponible, pour des raisons aussi diverses que sa dangerosité (champ de bataille, centrale nucléaire, ...) son éloignement (espace, surface d'une planète lointaine, ...) ou son utilisation par un tiers. Une application particulièrement intéressante est la formation et l'entraînement des équipes de maintenance, notamment dans le cas d'un matériel non disponible ou économiquement difficile à immobiliser (char de combat, station spatiale, porte avion, ...). Un environnement comportemental et interactif 1, s'il est suffisamment figuratif de l'environnement réel, permet de réaliser un nombre de tâches de maintenance en simulation sans nécessiter l'immobilisation d'un matériel.

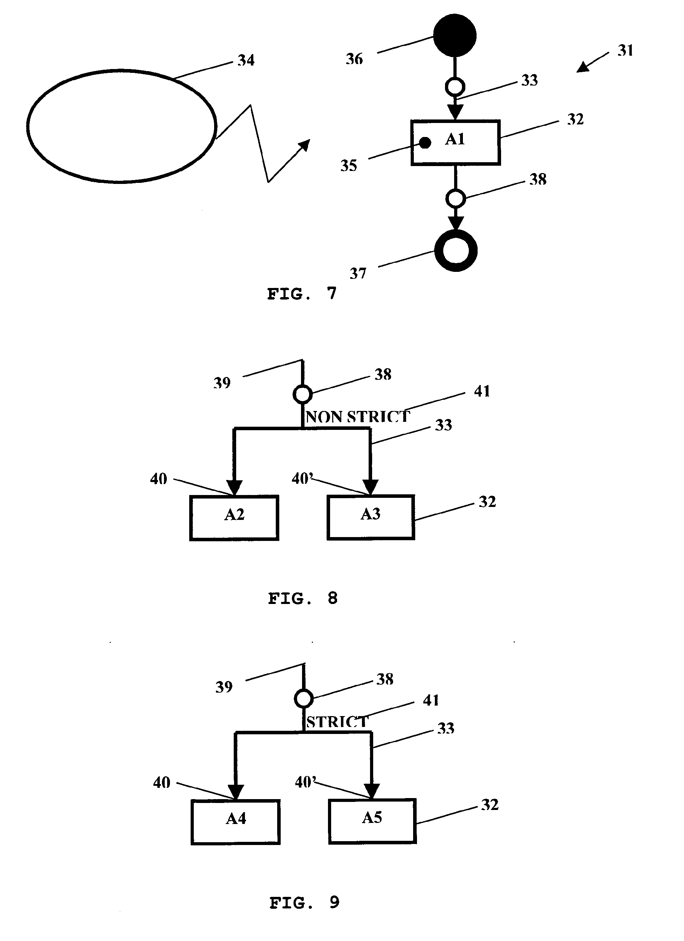

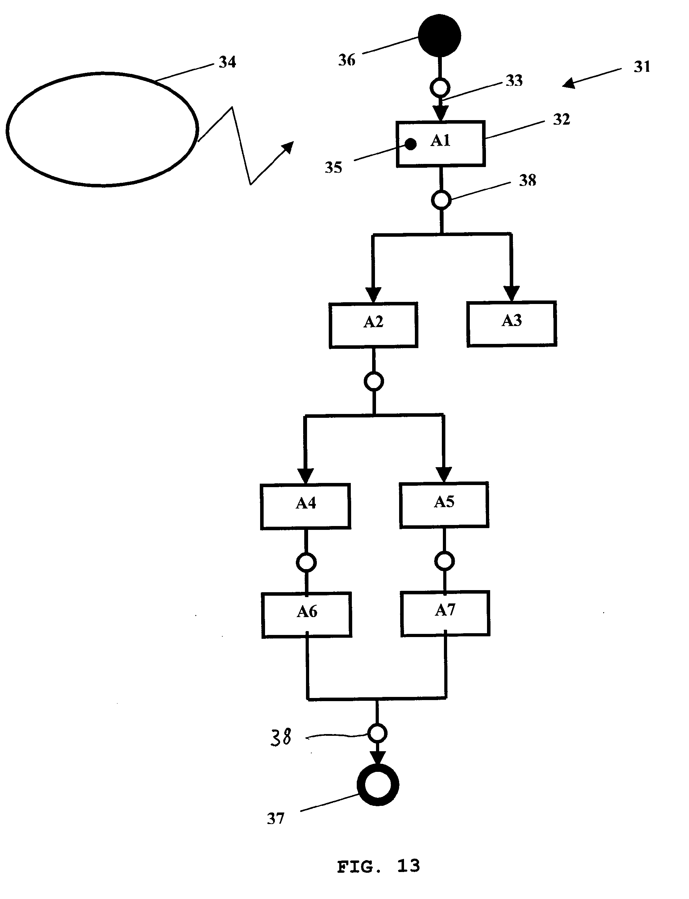

L'invention met par ailleurs en oeuvre une méthode de scénarisation d'une session de formation destinée à un opérateur humain. Un environnement de réalité virtuelle 1 permet de simuler un environnement réel et de placer un opérateur 55, 70 en situation d'interaction avec cet environnement. Ceci est propice, à la mise en place de moyens de formation selon des pédagogies où l'opérateur 55 apprend en essayant. Il est possible de le laisser explorer l'environnement afin qu'il teste différentes actions, parmi celles possibles, jusqu'à trouver l'enchaînement de gestes techniques qui convient. Afin de fixer le cadre d'une session d'apprentissage, le formateur 70 doit pouvoir définir ce qui est autorisé, ce qui ne l'est pas et la séquence ou l'enchaînement des actions nécessaires à la réalisation d'une tâche prescrite. Une telle définition d'un enchaînement d'actions est ce que l'on nomme un scénario 58 de session de formation. Afin d'exprimer les différentes options possibles pour la réalisation d'un geste technique que l'on souhaite enseigner à l'opérateur 55, un tel scénario 58 de formation doit permettre de proposer des agencements d'actions comprenant des alternatives, des combinaisons, ainsi que des parallélismes. Pour cela on modélise un scénario 58 de formation par un graphe 31 tel qu'illustré, par exemple, sur la figure 7 ou encore à la figure 13. Ce graphe 31 est constitué d'étapes 32 modélisant par exemple les actions attendues de l'opérateur. Les étapes 32 sont reliées par des liens 33. Un graphe 31 présente une alternance d'étapes 32 et de liens 33. Une étape 32 s'intercale nécessairement entre deux liens. Un lien 33 s'intercale nécessairement entre deux étapes. La complexité des liens 33 va permettre une forte capacité d'expression dans la description des enchaînements. Un scénario 58 de formation est rendu actif au cours d'une session de formation, par un moteur 34 de scénario. Ce moteur 34 a pour fonction d'interpréter le graphe 31 en fonction des étapes 32 et des liens 33 qu'il contient et en fonction des événements se produisant, principalement suite aux interactions de l'opérateur 55.

La figure 7 montre un graphe 31 de scénario simple, afin d'illustrer le fonctionnement du moteur 34 de scénario. L'interprétation d'un graphe 31 de scénario est effectuée par le moteur 34 au moyen d'au moins un jeton 35. Ce jeton 35 figure la ou les étapes ou liens actifs à un instant donné. Dans le cas d'un graphe 31 présentant plusieurs branches en parallèle, un jeton 35 peut se diviser en plusieurs jetons, chacun parcourant indépendamment de l'autre et en parallèle une des différentes branches. Dans le cas du scénario de la figure 7, le graphe 31 est le plus simple possible : il débute par une étape DEBUT 36, suivi d'un lien 33. Il comporte ensuite une étape 32 nommée A1 suivie d'un lien, aboutissant à une étape FIN 37. Les deux étapes DEBUT et FIN sont obligatoires au début et à la fin de chaque graphe 31. Un tel scénario 58 pédagogique a pour objectif d'amener l'opérateur 55 à effectuer l'action modélisée par l'étape A1. Cette action peut être par exemple la saisie par l'opérateur 20 au moyen de son avatar 19, d'un objet 2 particulier de l'environnement 1. Les objets et relations inter-objets dans l'environnement virtuel seront avantageusement modélisés par la méthode de modélisation des objets décrite précédemment et qui l'objet de la demande antérieure FR-2863738. Le moteur 34 de scénario débute le scénario en introduisant un jeton 35 au niveau de l'étape DEBUT 36. Cette étape DEBUT 36, transmet via un lien simple 33 ce jeton 35 à l'étape A1 immédiatement suivante. Le jeton 35 active cette étape A1. A cet instant le moteur 34 se place en attente de l'événement décrit par cette étape A1, s'il s'agit d'une étape ACTION. La figure 7 représente cet instant précis. L'étape A1 est active ainsi qu'en témoigne la présence du jeton 35 sur cette étape 32. Lorsque le moteur 34 détecte l'événement que constitue la réalisation par l'opérateur 55, 20, 19 de l'action attendue, ici la saisie par l'opérateur de l'objet 2 particulier, l'étape A1 s'achève. Elle libère alors le jeton 35 et le transmet au lien suivant, qui le transmet à l'étape suivante, l'étape FIN 37. Le moteur 34 détruit alors l'étape Al, maintenant terminée. L'arrivée du jeton 35 à l'étape FIN 7 entraîne la fin de l'interprétation du graphe 31 et la fin du scénario. Le moteur 34 peut alors détruire le graphe 31 et tous les éléments non déjà détruits qu'il contenait.

Le moteur de scénario 34 est une entité événementielle. Il peut se suspendre pour se mettre en attente. Il s'anime sur la réception d'un événement, par exemple une action particulière qui vient de se dérouler dans l'environnement virtuel, continue de fonctionner tant que les étapes 32 ou les liens 33 du graphe 31 qu'il interprète évoluent. Il se suspend dès que tous arrivent dans un état stable. A tout moment, le moteur 34 est consultable par l'opérateur 55, afin de lui fournir des informations sur les actions possibles. De plus il affiche toujours la connaissance de ce qui doit être fait dans le monde pour réaliser le geste objectif de la formation.

Le moteur 34 a essentiellement un rôle de surveillance événementielle de l'environnement virtuel 1. Il peut cependant être utilisé afin de jouer des actions dans l'environnement. Il déclenche alors des demandes d'actions correspondantes aux étapes. Ensuite, il continue d'agir dans son rôle de surveillance.

Un graphe 31 de scénario peut être stocké, en mémoire de masse, par exemple sous sa forme textuelle telle que décrite plus loin. Lors du démarrage d'une session de formation, le moteur charge un tel fichier et crée en mémoire vive une structure représentant l'enchaînement des étapes 32 et des liens 33 de l'ensemble du scénario. Ceci permet la modification dynamique en mémoire de la structure du graphe 31 ou des données. Lorsqu'il est terminé, un graphe 31, un lien 33 ou une étape 32 est détruit : il est supprimé de la mémoire vive.

A un graphe 31 peuvent être associés des variables et/ou des paramètres. La validité d'une variable dure le temps d'activation de ce graphe 31, soit entre l'interprétation de son étape DEBUT 36 et l'interprétation de son étape FIN 37. Les variables peuvent avantageusement être utilisées par les étapes 32 de ce graphe 31. Elles sont principalement utilisées par les étapes CALCUL. Les paramètres permettent de rendre un graphe générique.

Il a été décrit pour un graphe 31, la présence en début d'une étape DEBUT 36 et en fin d'une étape FIN 37. Une étape DEBUT 36 permet de débuter l'interprétation d'un graphe 31. Elle présente une unique sortie connectable à l'entrée 39 d'un lien 33. Le lien qui suit une étape DEBUT 36 ne présente qu'une seule entrée. Une étape FIN 37 permet de terminer l'interprétation d'un graphe 31. Elle présente une unique entrée connectable à la sortie 40 d'un lien 33.

Outre le type DEBUT et le type FIN, les étapes 32 peuvent être de plusieurs types. Un premier type est le type ACTION. C'est le type principal, en ce qu'il permet de définir une action dans l'environnement virtuel. Une étape ACTION décrit une action modélisée selon la méthode de modélisation des objet/relations décrite précédemment. Il est possible de définir une action dont on attend la réalisation par l'opérateur. Ceci correspond à une pédagogie de la découverte. Alternativement, il est possible de définir une action et de provoquer son exécution lors de l'activation de l'étape 32. Dans un scénario pédagogique 58, il peut être souhaitable de montrer une action, dans le cadre d'une pédagogie plus démonstrative. Cette démonstration peut être le cas échéant un préalable à une répétition par l'opérateur 20, elle aussi définie par le graphe 31 de scénario. Une telle étape ACTION présente une entrée 39. Une étape ACTION présente le plus souvent une sortie 40 permettant sa connexion vers un lien 33 suivant. Cette sortie 40 si elle existe est unique. Elle peut être absente. Il s'agit alors d'une étape de terminaison silencieuse. Il peut s'agir d'une action possible mais facultative.

L'opérateur 55 en formation, peut à tout instant interroger l'environnement pour connaître l'état d'un objet. Un scénario 58 de formation peut explicitement interdire une action. Ceci est introduit dans le graphe 31 au niveau de l'étape ACTION correspondante. Le graphe comprend alors cette étape affectée d'un attribut INTERDIT. Cette étape ACTION est alors effectivement impossible à réaliser par l'opérateur, mais de plus l'opérateur 55 peut connaître cette interdiction en interrogeant l'environnement. Toute ACTION non incluse et autorisée dans le graphe 31 de scénario est implicitement interdite. L'attribut INTERDIT, permet cependant au formateur 70 qui prépare les scénarios 58 de formation, de mettre l'accent sur une action par exemple très critique ou très dangereuse. Le fait de l'inclure avec un attribut INTERDIT peut permettre de déclencher une action particulière si l'opérateur tente de la réaliser.

Un autre type d'étape 32 est le type CALCUL. Une telle étape effectue un calcul sur les variables et paramètres associés au graphe 31 la contenant. Elle contient une formule modifiant les valeurs de certaines variables ou de certains paramètres. Elle est activée par l'arrivée d'un jeton 35 au niveau de son entrée 39 unique. Elle est détruite dès que le calcul est terminé. Elle peut présenter une sortie 40 afin de transmettre l'activation à un lien 33 suivant.

Un moyen de réaliser des variations de l'enchaînement des étapes est l'utilisation de liens 33 qui sera décrite plus loin. Afin de définir des enchaînements complexes et/ou conditionnels, il existe un autre type d'étape, l'étape CONDITION. Une telle étape 32 comporte une entrée 39 qui permet son activation et deux sorties 40. Cette étape comprend une formule booléenne qui est évaluée lors de l'activation de l'étape. Cette évaluation produit un résultat VRAI ou FAUX. Lorsque le résultat est VRAI, le contrôle est transmis, au moyen du jeton 35, à la première sortie. Lorsque le résultat est FAUX, le contrôle est transmis à la seconde sortie. Il est ainsi possible de réaliser un aiguillage redirigeant le contrôle vers une branche du graphe 31 ou une autre, selon une fonction pouvant être complexe.

Un autre type d'étape est le type MACRO. Une étape du type MACRO contient un nouveau graphe. Ceci permet de définir une hiérarchie de graphes imbriqués les uns dans les autres. Une telle étape comprend une entrée 39 qui est connectée à l'étape DEBUT du graphe contenu. L'étape FIN du graphe contenu est connectée à l'éventuelle sortie 40 de l'étape MACRO.

Au sein du graphe 31 modélisant un scénario 58, les étapes 32 décrites précédemment, sont connectées par des liens 33. Les liens 33 définissent les enchaînements des étapes 32 en permettant les transferts conditionnels des jetons 35. Un lien 33 pouvant être multiple, présente une ou plusieurs entrées 39, 39' et une ou plusieurs sorties 40, 40'. Chacune de ces entrées est connectable à une sortie d'une étape. Chacune de ces sorties est connectable à une entrée d'une étape. Un lien 33 comporte aussi au moins un connecteur 38 qui conditionne la manière dont s'effectue le transit d'un jeton 35 au travers dudit lien 33. Un attribut d'exclusivité EXCLUSIF ou NON EXCLUSIF défini, en présence d'une fonction logique OU, s'il s'agit d'un OU EXCLUSIF ou d'un OU non EXCLUSIF. Un attribut de parallélisme 41 STRICT ou NON STRICT défini le mode de parallélisme mis en place par le lien 33.

Les figures 8 et 9 présentent des graphes partiels et illustrent l'utilisation de l'attribut 41 STRICT ou NON STRICT.

Sur la figure 8, le lien 33 présente une entrée 39, un unique connecteur 38, deux sorties 40, 40' et un attribut 41 NON STRICT. A l'arrivée d'un jeton 35, le lien est activé et traversé. Il produit un dédoublement du jeton 35 en deux jetons qui activent simultanément les étapes suivantes A2 et A3. L'attribut 41 est ici NON STRICT. Ceci indique que les deux étapes A2 et A3 sont possibles. L'ordre de réalisation n'est pas important.

Sur la figure 9 a contrario, le lien 33 présente un attribut STRICT. Ceci indique que les deux étapes A4 et A5 doivent impérativement être réalisées simultanément.

A l'instar de l'attribut de parallélisme, l'attribut d'exclusivité 41 caractérise un lien 33 présentant plusieurs sorties 40, 40' et est figuré graphiquement à côté du lien 33. Dans le cas ou l'attribut est EXCLUSIF, dès que l'une des sorties 40 est choisie, par exemple par réalisation de l'action décrite par l'étape immédiatement successive, les autres sorties 40' du lien 33 portant l'attribut d'exclusivité sont invalidées. Il n'est plus possible d'activer l'une des étapes des branches alternatives. L'ensemble des étapes 32 et des liens 33 des branches alternatives sont supprimés du graphe 31.

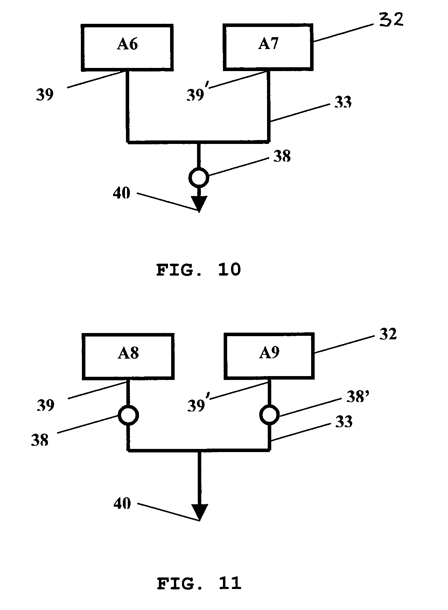

Les figures 10 et 11 illustrent l'utilisation de connecteurs 38 pour la réalisation de différentes fonctions logiques. Sur la figure 10, le lien 33 situé après A4 et A5 présente deux entrées 39, 39', une sortie 40 et un unique connecteur 38. La terminaison d'une quelconque des deux étapes A6 ou A7 libère un jeton 35 qui active le connecteur 38 et transfère le contrôle à l'étape suivante connectée à la sortie 40. Ici on réalise un comportement de OU logique. La terminaison d'une des deux étapes A4 OU A5 entraîne la validation et la terminaison du lien 33. Il n'est dans ce cas plus nécessaire d'attendre la fin de l'autre étape qui peut être détruite lors de la destruction du lien 33.

A contrario, comme illustré sur la figure 11, un lien 33 situé après A8 et A9, présente deux entrées 39, 39', une sortie 40 et deux connecteurs 38, 38'. Ce lien 33 n'est validé, que lorsque chaque connecteur 38, 38' a reçu un jeton 35. Un tel lien 33 réalise une fonction ET logique. Il est nécessaire pour valider ce lien de réaliser la terminaison de l'étape A8 ET de l'étape A9.

Les deux illustrations précédentes montrent comment la position du ou des connecteurs 38, 38', en amont ou en aval du lien 33, ou encore au niveau des entrées 39, 39' ou des sorties 40, 40' détermine la fonction logique que réalise le lien 33. Selon une caractéristique avantageuse de l'invention le graphe 31 d'un scénario 58 est représentable sous forme graphique par exemple sur un écran de visualisation. Cette représentation est illustrée dans les différentes figures. Une seconde représentation textuelle de ce même graphe 31 est avantageusement utilisée. Une caractéristique importante de l'invention est de maintenir en permanence une stricte identité entre les deux représentations. Les deux représentations sont équivalentes. Il existe un logiciel interprétation permettant de traduire le graphe en représentation textuelle et inversement. Il est possible de modifier le graphe 31 en éditant soit la représentation graphique avec un éditeur graphique soit la représentation textuelle avec un éditeur textuel. Toute modification de l'une ou de l'autre représentation est immédiatement et automatiquement répercutée à la seconde représentation, afin de maintenir à tout instant une stricte équivalence sémantique entre les deux représentations. La représentation graphique est intuitivement plus lisible pour un formateur peu formé au langage utilisé. Il est plus délicat d'y faire apparaître certaines nuances, par exemple au niveau de certains attributs des étapes ou des liens. La représentation textuelle est plutôt utilisable par un programmeur. Elle permet de bien faire apparaître tous les attributs de détails. La lisibilité des enchaînements est moins intuitive. La représentation textuelle permet aussi d'envisager un générateur automatique de scénario.

Le moteur 34 interprète le graphe 31 d'un scénario 58. Il est envisageable de modifier le graphe 31 pendant son interprétation sous le contrôle et la surveillance du moteur 34. Il est toutefois préférable, afin d'éviter de créer une instabilité du comportement du graphe, de limiter ces modifications aux seules étapes et liens non activés au moment de l'édition.

La représentation textuelle d'un graphe de scénario est avantageusement réalisée à l'aide d'un langage balisé. Un tel langage encapsule toute information entre deux balises qui définissent et typent l'information. La première balise est dite d'ouverture et la seconde de fermeture. Il est possible, par exemple, d'utiliser le langage XML qui utilise des balises de la forme <Balise> pour ouvrir et </Balise> pour fermer. L'écriture textuelle se présente sous forme d'une suite d'enregistrements, le cas échéant imbriqués, de la forme : <Balise>Information associée à Balise</Balise>.

Le paragraphe suivant présente la représentation textuelle d'une partie de graphe paramétrable comprenant une étape "Poser l'objet sur sa cible" de type MACRO contenant un graphe constitué d'une étape DEBUT, de deux étapes ACTION "bouger la caméra" et "poser l'objet" disposées en parallèle NON STRICT selon une relation OU et d'une étape FIN, ainsi que les liens nécessaires, exprimée dans un langage balisé. L'action "bouger la caméra" est facultative en ce qu'elle est dans une logique OU et qu'elle ne présente pas de sortie.

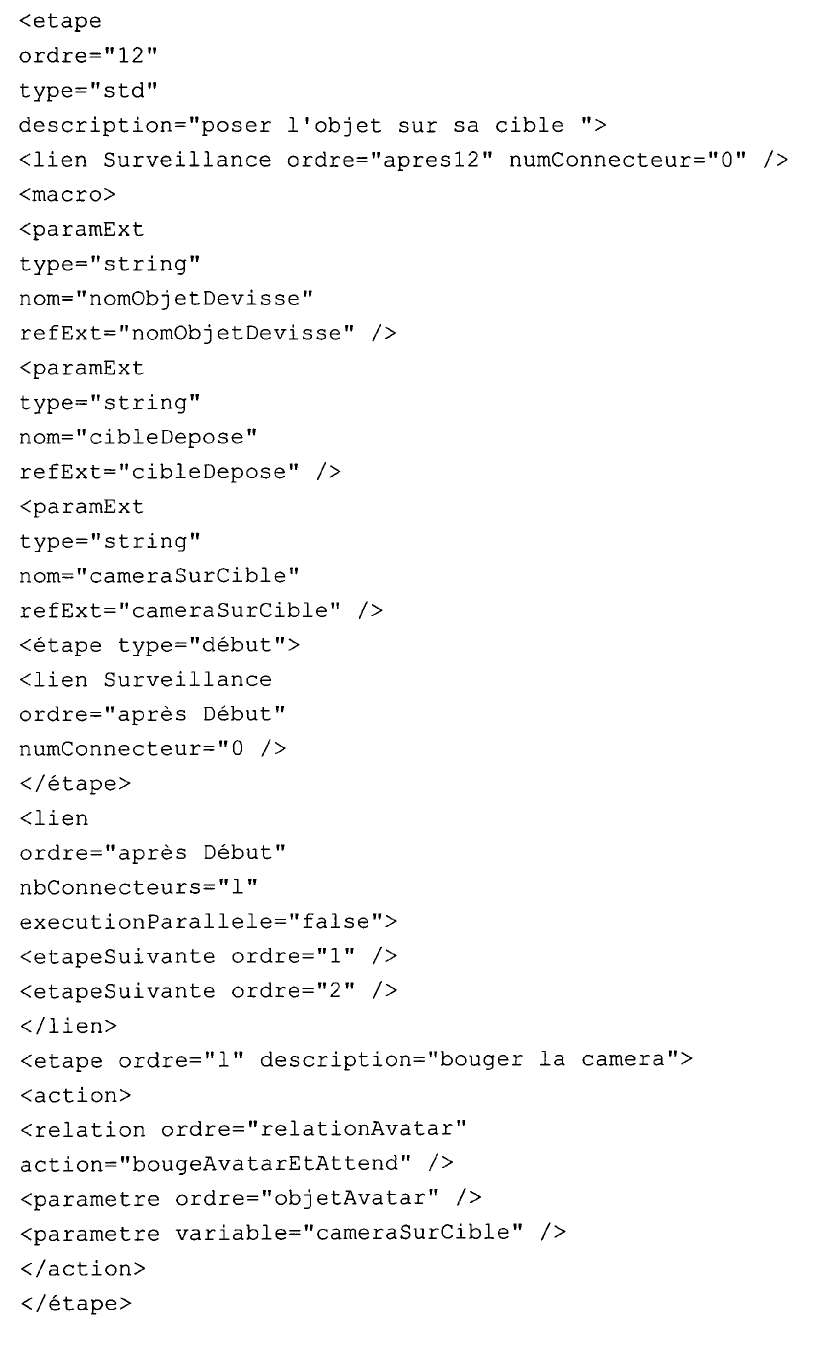

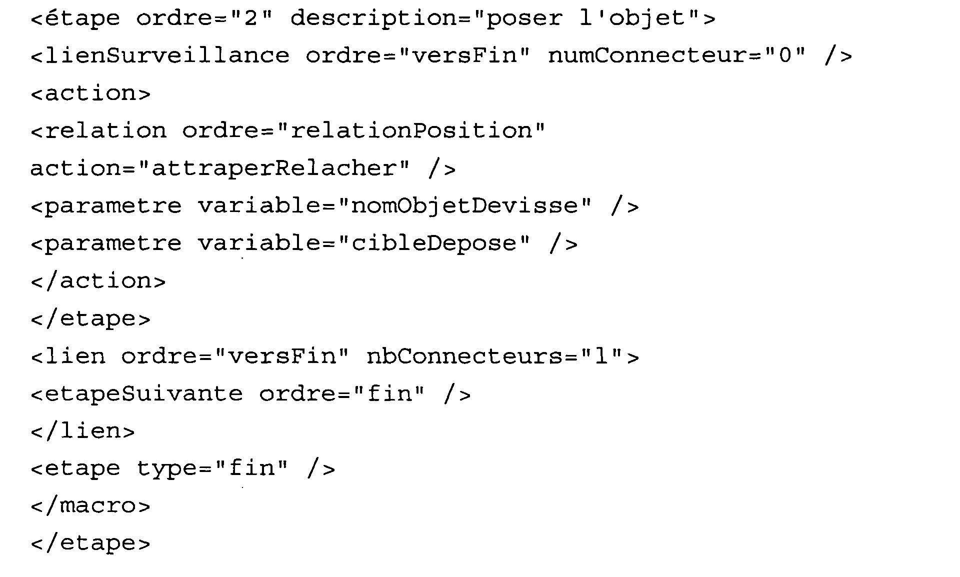

Afin de permettre l'identification de chaque élément, un nom unique lui est associé. Au sein d'un graphe 31, entre son DEBUT et sa FIN, est ouvert un espace de nom. Dans le cas de graphes hiérarchiquement imbriqués, l'espace de nom est propre et interne à un graphe et exclusif de l'espace de nom du graphe de niveau supérieur. Un élément graphe 31, lien 33 ou étape 32 est désigné de manière unique par un nom qui ne peut être utilisé qu'une seul fois au sein de l'espace de nom du graphe contenant cet élément.

Afin de mieux expliciter la méthode de construction d'une session de formation selon la présente invention, le mieux est d'appuyer la description sur un exemple illustratif d'une construction de session de formation.

La session de formation qui sert ici d'exemple a pour objectif de faire réaliser à l'apprenant une tâche consistant à visser deux vis sur un support. Les deux vis doivent être vissées, mais l'ordre de vissage est indifférent.

Pour construire la session de formation correspondante, le formateur doit d'une part mettre en place un cadre de travail 51 et d'autre part définir le scénario 58 comprenant au moins les actions que l'apprenant doit nécessairement réaliser et leur enchaînement.

Le cadre de travail 51 comprend, dans l'environnement de réalité virtuelle simulant le monde, au moins les objets indispensables à la session de formation. Ici le formateur a besoin au moins d'un objet support présentant une certaine extension tridimensionnelle, par exemple parallélépipédique, et la capacité d'accueillir au moins deux vis, par exemple en présentant deux trous taraudés. Il doit disposer encore de deux objets vis adaptés. Le cadre de travail 51 doit contenir au moins ces trois objets. Il peut cependant être enrichi par d'autres objets ayant un rôle pédagogique ou simplement figuratif. Le formateur peut par exemple ajouter d'autres objets pour permettre et obliger un choix des bonnes vis. Afin de construire le cadre de travail 51, le formateur effectue les opérations suivantes :
- sélection d'un objet,
- dimensionnement interactif de l'objet,
- positionnement interactif de l'objet dans l'espace tridimensionnel,
- édition des caractéristiques non dimensionnelles de l'objet,
- répétition des opérations précédentes pour chaque objet jusqu'à obtenir le résultat souhaité,
- sauvegarde de l'ensemble des objets et de leurs caractéristiques dans un fichier cadre de travail.

Ces opérations vont être détaillées dans le cas de l'exemple considéré. Le formateur 70 sélectionne un objet support. Cette sélection s'effectue par exemple dans une bibliothèque d'objets existants ou fait appel à un éditeur d'objet qui permet de définir un objet particulier. Cet objet support est caractérisé par sa forme, le fait qu'il s'agisse d'un volume solide et par la présence d'au moins deux emplacements permettant d'y visser une vis. Chacune de ces caractéristiques est modélisée par une capacité de cet objet (la notion de capacité a été explicitée précédemment). Le formateur 70 sélectionne aussi deux objets vis. Il ajoute ces trois objets au cadre de travail 51. Selon la qualité de la modélisation proposée par l'environnement de réalité virtuelle, chacun de ces objets pourra comporter d'autres capacités modélisant des comportements annexes. Ainsi il est par exemple possible de doter chacun des objets d'une compacité empêchant un objet d'en traverser un autre. Il peut être possible de simuler la pesanteur entraînant la chute d'un objet vers un sol, lorsqu'il est relâché. Ces comportements peuvent être ajoutés à volonté en plus des capacités essentielles nécessaires à la session de formation, ici les capacités de vissage.

Afin que l'apprenant 55 puisse réaliser les opérations que l'on attend de lui, il est nécessaire que les deux vis soient éloignées du support dans la configuration initiale du cadre de travail 51.

Une des caractéristiques essentielles de l'invention est d'utiliser un module de réalité virtuelle 52 gérant un environnement 1 de réalité virtuelle et les possibilités de visualisation et de manipulation directe des objets virtuels 53 qu'il offre. Ceci concerne plus particulièrement les caractéristiques dimensionnelles ou positionnelles des objets 53, l'environnement étant graphique et tridimensionnel. Pour poursuivre la construction du cadre de travail 51, le formateur 70 après avoir sélectionné le support procède à son dimensionnement. On suppose que ce support est un parallélépipède et que l'on peut modifier ses trois dimensions, c'est à dire que l'objet présente des capacités d'interface permettant ces modifications. Le formateur 70 utilise alors son avatar 19 pour intervenir dans l'environnement 1 de réalité virtuelle. Par cette entremise, le formateur 70 sollicite l'objet support pour modifier par exemple sa largeur. Le formateur agit directement sur l'objet par exemple en l'étirant dans le sens de la largeur. Cette opération est interactive et le résultat est directement visible en retour sur le moyen de visualisation 22.

Le dimensionnement réalisé, il convient de positionner l'objet support dans l'espace. De manière analogue le positionnement s'effectue au moyen de l'avatar 19 qui permet de saisir l'objet pour le déplacer et/ou l'orienter à volonté. Une telle manipulation est plus intuitive qu'une définition littérale faisant par exemple intervenir des angles d'Euler et des coordonnées. On peut envisager, si l'objet prévoit une telle interface, de définir de manière interactive la position des trous filetés relativement au support. Toutes les caractéristiques géométriques du support, dimensions et positions sont avantageusement modifiées de manière interactive en utilisant directement les possibilités de l'environnement de réalité virtuelle. Le résultat est en permanence visualisé directement dans l'environnement d'utilisation final, permettant facilement de le comparer avec le résultat souhaité et d'intervenir de manière interactive pour l'atteindre.

D'autres caractéristiques non dimensionnelles ou non géométriques peuvent être nécessaires à la caractérisation du comportement de l'objet. Ainsi, la puissance d'une ampoule peut être renseignée, par exemple à l'aide d'un clavier, pour déterminer sa caractéristique électrique. Ces caractéristiques sont avantageusement précisées à l'aide d'un éditeur d'objet qui travaille par exemple sur une description textuelle de l'objet.

Dans l'exemple considéré, le formateur procède au dimensionnement et au positionnement des deux vis dans l'espace en manipulant de manière interactive les deux objets par l'intermédiaire de son avatar 19.

Il est à noter que ces différentes opérations ne sont pas nécessairement effectuées séquentiellement. Il est possible de sélectionner tous les objets, puis de les dimensionner avant de les positionner. Il est aussi possible de sélectionner un premier objet, de le dimensionner et le positionner avant de procéder de même pour les autres objets. Il est aussi possible, tant que le résultat souhaité n'est pas atteint, de reprendre soit le dimensionnement, soit le positionnement d'un objet en fonction par exemple du dimensionnement ou du positionnement relatif d'un autre objet.

Une fois que la scène obtenue est conforme à ce qu'il souhaite comme scène de départ pour la session de formation, le formateur 70 termine la construction du cadre de travail 51 en procédant à l'enregistrement. Cet enregistrement stocke dans un fichier toutes les données de définition des différents objets mis en oeuvre, avec leurs caractéristiques dimensionnelles, positionnelles et autres, afin de pouvoir ultérieurement recharger la scène tridimensionnelle à l'identique, au début d'une session de formation.

Le formateur procède par ailleurs à la définition du déroulement de la session de formation. Ce déroulement est défini par un scénario 58. Ce scénario 58 est décrit par la méthode de modélisation selon l'invention, décrite ci-dessus. Un scénario 58 se caractérise par un graphe 31 comportant des étapes 32 reliées par des liens 33. La construction de ce graphe 31 de scénario 58 s'effectue en réalisant les opérations suivantes :
- création interactive d'une séquence centrale d'actions en la réalisant,
- édition de la structure du graphe pour modifier les enchaînements,
- édition éventuelle de compléments au scénario,
- sauvegarde du graphe complet dans un fichier de scénario d'apprentissage.

Une caractéristique essentielle de l'invention est de définir la séquence principale ou centrale des étapes 32 du graphe 31 de scénario en les effectuant directement dans l'environnement de réalité virtuelle 1. Ainsi le formateur 70 commence la construction en réalisant une séquence d'actions que doit reproduire l'apprenant 55. Lors de cette opération démonstrative, les actions du formateur 70 sont « espionnées » et automatiquement transformées en étapes 32. Chaque étape 32 comprend le détail du ou des objets 53 mis en oeuvre et des relations utilisées. Un graphe préliminaire est construit en créant automatiquement une séquence des actions réalisées, dans l'ordre de leur réalisation.

Ainsi dans notre exemple, le formateur, réalisant la séquence d'actions qu'il attend de l'apprenant, saisit la première vis et la déplace pour la placer en position de vissage près du support. Ceci crée automatiquement une étape 32 contenant l'objet vis associé à une relation de déplacement. Ensuite le formateur réalise le vissage de la première vis sur le support. Pour cela il sélectionne le support d'une part, la vis d'autre part et active une relation de vissage entre ces deux objets. Ceci crée automatiquement une deuxième étape contenant l'action définie par les deux objets, support et vis, et la relation de vissage. Cette deuxième étape est placée dans un graphe séquentiel à la suite de l'étape précédente de déplacement.

Le formateur continue sa construction par démonstration en reproduisant les mêmes actions avec la deuxième vis. Il est automatiquement créé deux autres étapes qui viennent se placer à la suite des deux premières dans le graphe séquentiel. Le graphe ainsi construit automatiquement en « faisant » est nécessairement séquentiel puisque le formateur effectue les actions les unes après les autres. Le graphe séquentiel ainsi construit est réduit à une séquence centrale. Il se caractérise par une construction démonstrative, directement effectuée dans l'environnement de réalité virtuelle, le formateur 70 oeuvrant comme le fera l'apprenant 55. Cette opération est rapide. Les objets et relations des actions contenues dans les étapes sont automatiquement reproduits avec les bons paramètres sans risque d'erreur de recopie. Ceci permet la mise en place des éléments principaux du scénario 58.

L'ordre de vissage est ici indifférent. Il est donc nécessaire de modifier la structure du graphe pour remplacer la séquence des actions par un graphe faisant apparaître deux branches, une pour chaque vis, avec une liaison ET entre ces deux branches. Les actions restent les mêmes, mais les liens qui les relient sont modifiés. Ainsi le graphe correspond au schéma d'enchaînement attendu : chaque vis doit être déplacée et vissée sur le support, l'ordre de manipulation des vis importe peu mais en final, les deux doivent être réalisées. Aussi, à partir de la séquence centrale construite par l'exemple, le formateur dispose d'une base de travail. Dans une seconde opération, il modifie cette base pour définir le scénario 58 souhaité. Cette édition peut se faire par exemple à l'aide d'un éditeur 65. Cette opération peut apporter des modifications au graphe 31 lui-même, comme dans l'exemple où le graphe des possibilités est enrichi par la définition de branches et d'une relation ET entre elles. Le langage de description de scénario, décrit précédemment, offre une possibilité de double représentation équivalente, sous forme graphique et textuelle. La forme graphique est avantageusement éditable afin de modifier la structure des enchaînements au sein du graphe 31. La forme textuelle peut aussi être utilisée. Le langage permet de nombreux attributs et fonctions pour décrire les possibilités du graphe. On pourra utiliser les fonctions ET, OU et les parallélismes STRICT et NON STRICT définis précédemment. Tous ces attributs sont éditables depuis l'éditeur graphique ou depuis l'éditeur textuel.

Le scénario est ainsi construit. Le formateur 70 peut encore souhaiter compléter son scénario en autorisant d'autres opérations annexes ou facultatives. Ainsi il lui est par exemple possible d'ajouter une branche facultative comprenant une étape d'orientation d'une caméra. Le déplacement de cette dernière permettant un meilleur point de vue du support afin de faciliter la mise en place des vis. Cette étape devient alors possible à l'apprenant 55, bien que facultative. De manière analogue, le formateur 70 peut définir des actions interdites et les inclure dans le scénario. Cette dernière opération s'effectue avantageusement avec un éditeur agissant sur la représentation graphique ou sur la représentation textuelle du graphe de scénario. Pour définir une séquence d'actions, le formateur peut avantageusement repasser en mode démonstratif. Il peut repasser à loisir ensuite dans le mode d'édition graphique ou textuel, selon ce qu'il souhaite ajouter ou modifier, ou selon sa préférence.

L'avantage de travailler directement dans l'environnement de réalité virtuelle est de présenter une unité entre le monde de travail de l'apprenant 55 et celui dans lequel le formateur 70 construit son scénario 58. Le formateur 70 dispose ainsi d'un retour immédiat et semblable à celui auquel sera confronté l'apprenant 55. Le formateur effectue tant que de besoin et dans l'ordre de son choix, les trois opérations : construction par démonstration, édition graphique et édition textuelle, jusqu'à obtention du scénario 58 qu'il souhaite.

Il effectue alors une dernière opération de sauvegarde de ce scénario, qui est stocké dans un fichier, permettant de le recharger et de l'exploiter au moyen du moteur 34 de scénario lors du lancement d'une session de formation.

L'opérateur/apprenant/formateur 20, 55, 70 peut interagir avec les objets 53 par l'intermédiaire d'un avatar 19, qui le représente dans le monde virtuel 1 simulé par le module de réalité virtuelle 52. Cet avatar 19 est un objet 53 contrôlé par l'opérateur et qui peut interagir (pousser, cogner, saisir,...) avec les autres objets virtuels. Un tel environnement 1 est bien approprié à une mise en situation de l'opérateur afin de lui faire effectuer des actions par exemple pour l'apprentissage de gestes techniques ou d'enchaînement d'actions permettant la réalisation d'une tâche prescrite. L'objectif de la formation est de permettre à un apprenant 55 d'acquérir le bon enchaînement d'actions pour résoudre un problème particulier.

L'enchaînement des actions possibles pour résoudre un geste technique, est un scénario 58, modélisé par un graphe 31, constitué d'étapes 32 représentant des actions à effectuer par l'apprenant pour réaliser son objectif de formation et de liens 33 figurant les différents cheminements d'une étape 32 à une autre. Un tel scénario 58 est l'expression des actions à réaliser obligatoires ou facultatives, ainsi que tous les cheminements possibles ordonnançant ces actions. Un tel scénario 58 est animé par un moteur 34 de scénario qui suit les actions effectuées par l'opérateur afin de valider les actions correctes et d'interdire les actions inutiles ou interdites. Ce moteur permet de contrôler le déroulement de la session de formation en fonction des événements produits par l'opérateur/apprenant.

Une caractéristique essentielle de l'invention consiste à détecter l'intention de l'apprenant 55 avant qu'il ne réalise une action. Ceci est important afin de permettre de « comprendre » le schéma mental de l'apprenant 55 et de pouvoir intervenir sur le déroulement pédagogique de la session en cas de dérive. Un module de détection de l'intention 67 est utilisé pour réaliser cette détection de l'intention. Ce module 67 va s'appuyer essentiellement sur une expression de l'apprenant 55, seul moyen d'appréhender son schéma de pensée à un instant donné.

L'expression de l'apprenant est selon les cas soit spontanée l'apprenant 55 explicitant ce qu'il a l'intention de faire, soit sollicitée par le module 67 qui interroge l'apprenant 55 sur ses intentions.

Selon un premier mode de réalisation, le module de détection 67 comprend un module de reconnaissance vocale. Ce module analyse les paroles énoncées par l'apprenant 55. Un tel moyen peut s'utiliser dans le cas d'une expression sollicitée ou spontanée. Il est plus particulièrement adapté à une pédagogie faiblement guidée. Ainsi dans le cas d'un apprenant 55 déjà au fait des actions possibles, cet apprenant peut librement exprimer, parmi des actions qu'il connaît ou sait possibles, l'action qu'il envisage de réaliser. L'expression de l'apprenant peut être plus ou moins libre, le module de reconnaissance ayant en charge d'extraire des paroles de l'apprenant des éléments qui seront ensuite rapprochés des actions possibles.

Selon un second mode de réalisation, Le module de détection comprend une proposition d'actions possibles, organisées en menu, proposée au choix de l'apprenant qui sélectionne l'action qui correspond à ce qu'il souhaite effectuer. Ce menu est construit en incluant les actions attendues, complétées par d'autres actions possibles ou même impossibles. L'expression de l'intention de l'apprenant est dans ce mode de réalisation plus encadrée. Un tel module de détection est plus adapté à une pédagogie fortement guidée, correspondant à un apprenant 55 faiblement expérimenté. Une telle approche présente l'avantage de proposer des actions à l'apprenant 55. Il est cependant possible de distinguer un guidage moyen dans lequel le menu comprend des macro actions regroupant plusieurs actions de détail, d'un guidage fort dans lequel le menu comprend des micro actions pouvant se réduire à des actions élémentaires.

A contrario le premier mode de réalisation est plus adapté à un apprenant déjà au fait des actions possibles, puisqu'il doit lui-même les énoncer.

Une des caractéristiques essentielles de l'invention est de capter, à l'aide du module de détection 67, l'intention de l'apprenant et ensuite de l'exploiter. Afin d'exploitation, on prévoira des moyens permettant de déterminer un indicateur de pertinence à partir de cette intention. Pour cela l'intention est associée à une ou plusieurs actions. Cette association est effectuée soit directement dans le cas d'un guidage fort, l'apprenant exprime son intention sous forme d'action soit par un traitement préalable qui extrait de l'expression, par exemple vocale, des éléments désignant une ou plusieurs actions. Ces actions sont ensuite comparées avec les actions attendues de l'apprenant dans le déroulement de la session de formation. Ceci s'effectue simplement car les actions à réaliser à un instant donné sont indiquées par le scénario 58. De cette comparaison est obtenue un indicateur que l'on nomme pertinence et qui qualifie numériquement la « qualité » de l'intention au regard de l'action attendue. Toute méthode numérique est ici utilisable qui permette de faire correspondre une valeur de pertinence d'autant plus élevée que l'intention participe de la résolution du problème posé ou encore rapproche de la fin dans le graphe 31 de scénario. La pertinence est ainsi un indicateur d'un bon ou d'un mauvais schéma mental de l'apprenant 55 pour répondre au problème pédagogique posé. La pertinence est un outil de contrôle préventif de l'apprenant en ce qu'il analyse la démarche de l'apprenant a priori.

Un autre outil est avantageusement mis en place. Un module d'enregistrement 68 « espionne » l'apprenant 55 et enregistre toute action de sa part dans l'environnement de simulation ainsi que l'ordre d'exécution de cette action. Cet enregistrement permet toute analyse a posteriori des actions de l'apprenant. Il peut être utilisé pour comprendre comment une erreur est apparue dans la suite des actions effectuées par l'apprenant.

Une utilisation possible de cet enregistrement est la production d'un indicateur de cohérence. Cet indicateur est obtenu, par exemple selon la même méthode numérique que pour la pertinence, en comparant l'action effectuée par l'apprenant et enregistrée par le module d'enregistrement 68 avec l'intention indiquée au préalable. L'indicateur de cohérence est un indicateur de qualité numérique. Il est obtenu a posteriori, puisque l'action est réalisée. Il est représentatif de la capacité de l'apprenant 55 à mettre en oeuvre son intention. Il est donc significatif de sa capacité fonctionnelle et opérationnelle dans l'environnement de simulation. Ainsi une mauvaise cohérence peut révéler une mauvaise compréhension de l'utilisation du système de simulation. Il peut s'agir d'une inadaptation de l'interface homme machine 54 ou d'un manque de formation de l'apprenant 55 à l'outil. Cet indicateur participe à un processus curatif. Le formateur 70 dispose d'un outil lui permettant de répondre à la question « que voulais-tu faire ? », afin de remonter a posteriori à la cause de l'erreur.

Si par ailleurs la pertinence est bonne, indiquant que le schéma conceptuel de l'apprenant est bon et qu'il effectue les bons choix d'action pour parvenir à la solution du problème posé, une mauvaise cohérence peut indiquer un problème de forme lié à l'utilisation du simulateur. Il apparaît donc différentes origines d'erreur que l'on identifie clairement et auxquelles le formateur 70 peut donner des réponses très différentes.

Le formateur 70 peut intervenir directement en surveillant l'apprenant 55 au travers de l'outil de simulation. Il est aussi possible selon une caractéristique de l'invention d'intégrer son expertise sous forme de règles au sein d'un module pédagogique 66. Avantageusement ce module déclenche des actions de démonstration, des fournitures d'indices à l'apprenant 55, un nouveau scénario plus détaillé
ou encore passe dans un mode de guidage plus fort afin de réorienter le déroulement de la session de formation en fonction des deux indicateurs de pertinence et de cohérence.

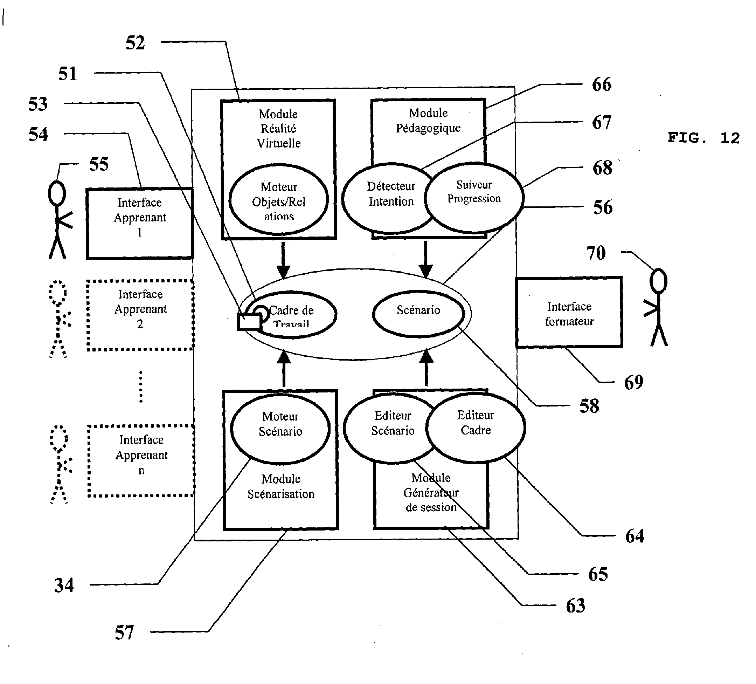

La figure 12 montre un système de formation selon l'invention. Ce système de formation est dédié à la formation d'un ou plusieurs apprenants 55, à l'exploitation, l'utilisation ou encore la maintenance d'un cadre de travail 51. Le système de formation selon l'invention utilise les possibilités offertes par la réalité virtuelle de simulation graphique tridimensionnelle et comportementale, réactive et interactive d'un cadre de travail réel par des objets virtuels 53 modélisant les objets du monde réel. L'invention concerne donc plus particulièrement des cadres de travail 51 concernés par l'apprentissage de savoir-faire liés à la géométrie ou aux propriétés physiques. Le cadre de travail 51 désigne ici tout matériel, tout poste de travail, tout environnement industriel autour duquel il est nécessaire d'apprendre à reconnaître des éléments, à reproduire des procédures, des gestes techniques. Un cadre de travail 51 peut par exemple être un véhicule, ou plus particulièrement son poste de pilotage ou encore son compartiment moteur, une salle de commande d'une centrale nucléaire ou l'intérieur d'un générateur de vapeur. Les objectifs pédagogiques concernent, par exemple, l'apprentissage de la reconnaissance de certains organes, de leur utilisation ou des procédures permettant leur entretien ou leur remplacement. Les domaines d'application de l'invention sont très variés et couvrent toutes les phases du cycle de vie d'un produit : de la fabrication au démantèlement en passant par leur exploitation ou leur maintenance. L'invention s'applique à tout cadre de travail 51 constitué par un objet technique modélisable géométriquement et par ses propriétés physiques et pour lequel il est souhaitable de former quelqu'un à l'exploitation, l'utilisation ou la maintenance.

Le système de formation objet de la présente invention comprend un module central de réalité virtuelle 52. Ce module est au coeur du système et assure la simulation des objets dans leur apparence, dans leurs comportements et dans leurs relations entre eux lorsqu'ils interagissent. Le cadre de travail 51 est modélisé par des objets virtuels 53 reproduisant les caractéristiques tridimensionnelles des objets du monde réel et présentant des propriétés intrinsèques et relationnelles simulant les propriétés du monde réel. Un tel module de réalité virtuelle 52 comprend classiquement un moteur d'objets et/ou de relations chargé de simuler en permanence les comportements et les relations de ces objets. Cette simulation est dynamique et réactive en ce qu'elle s'adapte à tout événement venant modifier l'un ou l'autre des objets. Elle est interactive en ce qu'un opérateur, formateur 70 ou apprenant 55, peut interagir avec un objet 53, pour le saisir, le déplacer... Ceci s'effectue par exemple au travers d'un avatar 19, objet 53 particulier représentant l'opérateur 70, 55 dans le monde virtuel, commandé par lui et pouvant interagir sur les autres objets 53 par l'intermédiaire de relations de contact, de saisie ou autres, que l'avatar 19 peut nouer avec ces objets 53.

Un tel système de formation comporte une interface homme machine 54 au travers de laquelle l'apprenant 55 interagit avec le cadre de travail 51. Cette interface homme machine 54 informe l'opérateur par différents canaux sensoriels : visuel, mais aussi auditif, tactile, kinesthésique,... classiquement utilisés dans les outils utilisant la réalité virtuelle. Cette interface homme machine 54 permet aussi à l'opérateur 55, 70 d'agir sur le monde virtuel, notamment au travers de moyens d'action lui permettant d'agir sur son avatar 19. Il peut s'agir de tout périphérique classiquement utilisé en informatique tel que souris, clavier ou joystick ou encore de tout organe de commande utilisé pour la réalité virtuelle.

Selon la qualité immersive, que l'on développera plus loin, l'apprenant 55 est plus ou moins immergé dans le cadre de travail virtuel 51. Il est confronté au cadre de travail 51 virtuel avec lequel il est mis en situation, comme il le serait au cadre de travail réel. Il peut ainsi au cours d'une session de formation 56, appréhender ce cadre de travail 51, le découvrir, le comprendre et interagir pour comprendre comment il fonctionne, comment il se comporte et apprendre à l'utiliser. Une pédagogie basée sur l'expérimentation est possible, et ceci sans danger ni pour l'apprenant 55, ni pour le cadre de travail réel, et sans nécessiter d'immobilisation de ce cadre de travail.

D'autres pédagogies sont aussi possibles. L'objectif pédagogique doit, quelle que soit la pédagogie envisagée, être clairement exprimé. L'objectif pédagogique est un savoir-faire qui s'exprime comme un enchaînement d'actions permettant de transformer le cadre de travail 51 par la réalisation d'une tâche complexe donnée. Une des caractéristiques essentielles du système de formation selon l'invention est de scénariser une session de formation 56. Pour cela, le système comprend un module de scénarisation 57. La tâche à réaliser par l'apprenant ou objectif pédagogique est représenté par un scénario 58. Le module de scénarisation 57 utilise cette représentation de scénario 58. Il analyse les actions de l'apprenant 55 et les compare avec la tâche prescrite telle que décrite par le scénario 58. Le module de scénarisation 57 sait ainsi à tout instant ce qu'a réalisé l'apprenant 55 sur le chemin vers l'objectif, ce qu'il doit faire immédiatement ensuite et l'ensemble des actions restant à faire et dans quel ordre.

Une session de formation 56 comprend deux éléments : un cadre de travail 51 qui définit le monde virtuel dans lequel l'apprenant évolue et un scénario 58 qui définit les actions que doit réaliser l'apprenant 55 pour réaliser l'objectif pédagogique et l'ordonnancement de ces actions. Afin de réaliser cette fonction, le module de scénarisation comprend un moteur de scénario 34. Ce moteur de scénario 34 analyse les actions de l'apprenant 55, les compare avec les actions attendues et valide progressivement les degrés de cette réalisation. Il réalise ainsi un suivi de l'apprenant 55. Il peut aussi informer l'apprenant sur les actions restant à réaliser. Un scénario 58 est ainsi progressivement déroulé au fur et à mesure de la validation des actions correctes.

L'interface homme machine 54 offerte à l'apprenant 55 peut être rudimentaire et se limiter par exemple à une simple interface d'un système informatique classique. La perception visuelle est présentée sur un écran de visualisation 22 et l'action s'effectue, par exemple, avec un clavier ou une souris. Cependant, l'objectif est de simuler le cadre de travail 51 et de mettre en situation l'apprenant 55. Aussi est-il avantageux d'utiliser une interface homme machine 54 immersive. Une telle interface 54 comprend des dispositifs de perception ou d'action permettant à l'apprenant 55 de s'immerger le plus possible dans le cadre de travail 51 virtuel. Parmi les dispositifs immersifs de perception on peut citer, sans que cette liste soit exhaustive :
- dispositif à retour d'effort,
- casque de visualisation,
- cube immersif,
- salle immersive,
- son tridimensionnel,
- ...
Pour les dispositifs immersifs d'action on peut citer :
- gant de donnée (dataglove),
- souris tri-dimensionnelle,
- capteur magnétique,
- ...

Meilleure est l'immersion de l'apprenant, plus profitable sera la formation. Les acquis obtenus dans le monde virtuel du système de formation seront ainsi d'autant plus facilement transposés ensuite dans le monde réel.

La figure 13 illustre la structure d'un scénario 58 illustratif. Le scénario 58 comprend, comme décrit précédemment en référence à la figure 7, un graphe 31. Le moteur de scénario 34 observe les actions réalisées dans l'environnement dont en particulier celle de l'apprenant 55 en fonction des actions contenues dans le graphe 31. Le graphe 31 comprend des étapes 32, chaque étape pouvant être associée à une action. De par la modélisation avantageuse des objets virtuels 53 telle que décrite précédemment, une action comporte la description précise de l'action réalisée, ainsi que des objets mis en oeuvre ou interagissant. Une étape 32 décrit ainsi complètement l'action à réaliser et son contexte précis. La symbolique utilisée pour le graphe de la figure 13 est analogue à celle décrite précédemment en référence aux figures 7 à 11.

Le moteur de scénario 34 suit l'avancement de l'apprenant dans le scénario 58 au moyen de jetons 35. Le ou les jetons déterminent à chaque instant la(les) étape(s) ou le(les) lien(s) actifs.

Ainsi dans l'exemple de la figure 13, le scénario a été activé, la session de formation a débuté. Après l'étape début 36, le premier lien 33 a été franchi et l'étape A1 est active, ainsi qu'en témoigne la présence du jeton 35. Le moteur 34 de scénario se met en attente jusqu'à ce que l'apprenant réalise l'action décrite à l'étape A1. Dès que cela est fait, le lien bifide suivant produit le dédoublement du jeton 35 en deux jetons qui activent respectivement l'étape A2 et l'étape A3. L'étape A3 est terminale et correspond à une étape facultative. Elle peut être réalisée, mais sa réalisation n'est pas attendue pour poursuivre. Il peut s'agir par exemple d'une opération de réorientation d'une caméra afin d'obtenir une meilleure perception du cadre de travail. L'étape A2 a contrario est obligatoire. Sa réalisation entraîne l'activation d'un nouveau lien 33 bifide qui dédouble le jeton afin d'activer les étapes A4 et A5. On est en présence de deux branches A4, A6 et A5, A7 réalisables en parallèles. Le dernier lien avant l'étape fin 37 présente un unique connecteur 38 en aval du lien, ce qui définit une relation OU entre les deux branches précédentes. A contrario, un double connecteur, sur chacune des entrées, en amont du lien, aurait nécessité un jeton 35 en provenance de chacune des branches pour être validé et aurait défini une relation ET. Le scénario 58 décrit par le graphe 31 prescrit ainsi que l'une OU l'autre branche doit être réalisée pour terminer l'objectif de formation.

Un tel graphe 31 de scénario 8 définit ainsi les divers enchaînements possibles pour réaliser une tâche objectif pédagogique. Il est à noter que cette description est exhaustive en ce que toutes les possibilités d'action offertes à l'apprenant sont décrites. Toute action ou tout enchaînement non spécifié dans le graphe 31 n'est pas possible. Le scénario 58 est ainsi la référence descriptive de la session de formation 56 en ce qui concerne l'objectif pédagogique prescrit.

Le module de réalité virtuelle 52 est avantageux pour simuler le cadre de travail 51, en ce qu'il permet à un apprenant 55 d'interagir avec les objets 53 de ce cadre de travail 51. Cette capacité d'interagir est avantageusement utilisée par un formateur 70 pour définir une session de formation. Pour cela le système de formation comprend un module de construction/génération 63 de session de formation qui permet au formateur 70 de définir de manière interactive une session de formation. Une session de formation nécessite deux composants. D'une part il est nécessaire de définir le cadre de travail 51 et d'autre part un scénario 58. Aussi, le module de construction de session de formation 63 comprend un éditeur interactif de cadre de travail 64 et un éditeur interactif de scénario 65.

Comme cela a été décrit précédemment, l'éditeur interactif de cadre de travail 64, permet au formateur 70 de s'immerger dans le monde virtuel, afin d'y créer directement et de manière interactive un cadre de travail 51. L'éditeur interactif de scénario 65, permet au formateur 70 de construire un scénario 58, en démontrant le geste objectif pédagogique, en l'exécutant directement dans le module de réalité virtuelle 52. Le système de formation est alors utilisé pour enregistrer la séquence des actions effectuées par le formateur 70. Cette séquence est automatiquement construite sous la forme d'un graphe 31. Chaque action réalisée de manière interactive par le formateur 70 produit une étape 32 lié à l'étape précédente par un lien 33. La partie centrale du graphe 31 séquentielle est ainsi automatiquement crée. L'éditeur 65 permet ensuite de modifier ce graphe 31 pour l'enrichir des actions alternatives ou facultatives.

Le module de construction 63 met en oeuvre la méthode de construction de la session de formation 56 décrite précédemment. Cette méthode, utilisant une approche interactive, permet une construction intuitive, qui autorise la définition d'une session de formation 56, cadre de travail 51 et scénario 58, par celui qui est le plus à même de la connaître, à savoir le formateur 70. Ce dernier peut ainsi se passer de l'intervention d'un informaticien, grâce à la simplicité du langage graphique proposé par l'invention.

Le système selon l'invention comprend un module pédagogique 66. Ce module a pour fonction de suivre la progression pédagogique de l'apprenant 55. Il garde la trace de ses différentes sessions, enregistre ses erreurs, ses difficultés et tous les éléments de l'historique, afin de pouvoir au mieux l'assister dans sa formation et ainsi différentier la pédagogie qui lui est appliquée.

Avantageusement le module pédagogique 66 comprend un outil de détection 67 de l'intention de l'apprenant 55. Cet outil met en oeuvre les moyens décrits précédemment. L'outil de détection 67 de l'intention fonctionne soit par une expression spontanée de l'apprenant 55 qui au préalable à la réalisation d'une action décrit ce qu'il compte réaliser, soit par un questionnement effectué par l'outil de détection de l'intention 67.

Le module pédagogique 66 comporte des moyens permettant de déterminer l'indicateur de pertinence, puis l'indicateur de cohérence.

Selon le type d'erreur, l'assistance à l'apprenant 55 se présente très différemment. Dans le cas d'une erreur conceptuelle, il convient, par exemple, de revenir sur les principes de fonctionnement du cadre de travail 51 ou de l'organe en cause. Dans le cas d'une erreur fonctionnelle, il est peut être plus adapté de fournir une aide sur l'utilisation de l'interface homme machine 54.

Le système de formation selon l'invention, dispose efficacement de son module pédagogique 66. Il peut fonctionner de manière autonome avec un apprenant 55, en l'absence de formateur 70. Dans ce cas le module pédagogique 66 pourra assurer seul, en fonction de règles préétablies, les aménagements de la session de formation nécessaires au suivi personnalisé de l'apprenant 55.

Une des caractéristiques importantes du système est de continuer à permettre à tout moment une intervention du formateur 70. Pour cela le système comprend une interface formateur 69. Cette interface 69 dispose de moyens étendus d'observation de l'apprenant 55. Le formateur 70 peut accéder aux actions réalisées, aux intentions de réalisation, aux pertinences, aux cohérences, ainsi qu'aux historiques de ces données. Le formateur 70 dispose ainsi d'une visibilité détaillée sur les actions de l'apprenant 55, ses erreurs, ses accomplissements. Le formateur 70 dispose au travers de cette même interface formateur 69 de moyens permettant d'agir sur le système de formation. Il peut par exemple venir éditer et modifier en cours d'exécution un scénario 58 ou un cadre de travail 51, de manière à simplifier ou rendre plus explicite à l'apprenant 55 une action ou une tâche. Il peut aussi agir pour changer de session de formation 56 afin de revenir à une session plus détaillée ou plus appropriée à l'apprenant 55 et aux difficultés qu'il rencontre ou encore passer à une étape ultérieure plus rapidement afin d'éviter l'ennui d'un apprenant 55 qui a déjà acquis les objectifs d'une session de formation. Tout ceci peut s'effectuer de manière transparente pour l'apprenant 55. Pour les cas les plus critiques l'interface formateur 69 offre des moyens de communication directe, textuelle, verbale ou visuelle entre le formateur 55 et l'apprenant 70.

Le système de formation selon l'invention peut comprendre plusieurs interfaces homme machine 54 ainsi que des moyens support permettant d'exécuter plusieurs sessions de formation 56 en parallèle pour plusieurs apprenants 55.

Le cas échéant, pour des opérations réelles nécessitant plusieurs opérateurs, une session de formation peut mettre en oeuvre une collaboration entre plusieurs apprenants 55 qui collaborent en interagissant dans et avec le même environnement virtuel. Une architecture possible est de disposer d'un ordinateur individuel par apprenant 55 et d'un ordinateur individuel pour le formateur reliés entre eux par un réseau. Le système, qu'il soit central ou distribué, est capable d'exécuter une session de formation 56 propre à chaque apprenant 55. Le système peut aussi proposer une unique session 56 construite autour d'un unique cadre de travail 51 à plusieurs apprenant travaillant de manière coopérative. L'intervention ponctuelle et ciblée du formateur 70 s'accommode du suivi parallèle de plusieurs apprenants 55.

## Revendications

1. Système de formation à l'exploitation, l'utilisation ou la maintenance d'un cadre de travail (51), comprenant un module de réalité virtuelle (52) modélisant ledit cadre de travail (51) et ses caractéristiques tridimensionnelles physiques et comportementales par des objets virtuels (53) autonomes et réactifs, une interface homme machine (54) permettant à un apprenant (55) d'être mis en situation et d'interagir avec le cadre de travail (51) simulé au cours d'une session de formation (56), ***caractérisé en ce qu*****'**il comprend un module de scénarisation (57) modélisant les actions que doit réaliser l'apprenant (55) pour atteindre l'objectif pédagogique consistant à la réalisation d'une tâche complexe et assurant le suivi et le contrôle des actions réalisées par l'apprenant (55).

2. Système de formation selon la revendication 1, **caractérisé en ce que** le module de scénarisation (57) comprend un moteur de scénario (34) qui assure le suivi et le contrôle du déroulement d'un scénario (58) modélisant les actions que doit réaliser l'apprenant (55) en fonction des actions réalisées par cet apprenant (55).

3. Système de formation selon la revendication 1 ou 2, **caractérisé en ce qu'**un scénario (58) comprend un graphe constitué d'étapes (32) modélisant des actions reliées par des liens (33) définissant exhaustivement les enchaînements possibles entre ces étapes (11).

4. Système de formation selon la revendication 3, **caractérisé en ce que** le graphe (31) comprend des étapes (32) reliées par des liens (33), le moteur (34) de scénario validant les étapes (32) et liens (33) en fonction des événements se produisant, afin de transmettre au moyen de jetons (35), le contrôle aux liens (33) ou aux étapes (32) suivantes.

5. Système de formation selon une des revendications 3 ou 4, **caractérisé en ce que** le graphe (31) comprend une première étape DÉBUT (36) comportant uniquement une sortie et une dernière étape FIN (37) comportant uniquement une entrée.

6. Système de formation selon l'une quelconque des revendications 3 à 5, **caractérisé en ce qu'**une étape (32) peut être une étape ACTION, modélisant une action attendue de l'opérateur, comportant une entrée et pouvant comporter une sortie, cette étape étant validée lorsque l'opérateur a réalisé l'action attendue.

7. Système de formation selon la revendication 6, **caractérisée en ce qu'**une étape ACTION présente un attribut INTERDIT qui empêche sa réalisation.

8. Système de formation selon l'une quelconque des revendications 3 à 7, **caractérisée en ce qu'**une étape peut être une étape CALCUL contenant une formule de calcul et comportant une entrée et éventuellement une sortie.

9. Système de formation selon l'une quelconque des revendications 3 à 8, **caractérisée en ce qu'**une étape peut être une étape CONDITION contenant une formule booléenne et comportant une entrée et deux sorties, la première sortie étant validée lorsque la formule booléenne est évaluée à VRAI et la seconde sortie étant validée lorsque la formule booléenne est évaluée à FAUX.

10. Système de formation selon l'une quelconque des revendications 3 à 9, **caractérisée en ce qu'**une étape peut être une étape MACRO contenant un nouveau graphe (31) et comportant une entrée et éventuellement une sortie.

11. Système de formation selon l'une quelconque des revendications 3 à 10, **caractérisée en ce qu'**un lien (33) comporte au moins une entrée (39) pouvant être reliée à une sortie d'étape, au moins une sortie (40) pouvant être reliée à une entrée d'étape, au moins un connecteur (38) permettant de déterminer la logique de transition de ce lien (33), un attribut d'exclusivité pouvant être EXCLUSIF ou NON EXCLUSIF et un attribut de parallélisme pouvant être STRICT ou NON STRICT.

12. Système de formation selon la revendication 11, **caractérisée en ce que** la position du connecteur (38) en amont ou en aval du lien (33), détermine la fonction logique réalisée par ledit lien (33).

13. Système de formation selon l'une quelconque des revendications 3 à 12, **caractérisée en ce qu'**un graphe (31) présente une représentation textuelle, par exemple balisée, et une représentation graphique équivalentes, éditables séparément et automatiquement mises en cohérence en permanence.

14. Système de formation selon la revendication 13, **caractérisée en ce que** la représentation d'un graphe est modifiable pendant son contrôle et sa surveillance par le moteur (34) de scénario.

15. Système de formation selon l'une quelconque des revendications 3 à 14, **caractérisée en ce que** chaque graphe (31), chaque étape (32), chaque lien (33) présente un nom unique au sein du graphe le contenant.

16. Système de formation selon l'une quelconque des revendications 1 à 15, **caractérisé en ce qu'**il comprend un module de génération (63) de session de formation interactif.

17. Système de formation selon la revendication 16, **caractérisé en ce que** le module de génération (63) de session de formation interactif comprend un éditeur interactif de cadre de travail et un éditeur interactif de scénario (65).

18. Système de formation selon l'une quelconque des revendications précédentes, **caractérisé en ce qu'**il comprend un module pédagogique (66) permettant la surveillance et le suivi de l'apprenant (55), ledit module pédagogique (66) comprenant un module de détection de l'intention (67) de l'apprenant (55) a priori.

19. Système de formation selon l'une quelconque des revendications précédentes, **caractérisé en ce que** le module pédagogique (66) comprend un outil (68) de suivi de la progression de l'apprenant (55) et des moyens pour intervenir sur le déroulement d'une session de formation.

20. Système de formation selon une des revendications 18 ou 19, **caractérisé en ce que** le module de détection comprend un module de reconnaissance vocale ou bien un choix dans un menu.

21. Système de formation selon une des revendications 18 à 20, **caractérisé en ce qu'**il comporte des moyens permettant de comparer l'intention détectée avec les actions qui doivent être réalisées par l'apprenant (55) afin de déterminer un indicateur de pertinence.

22. Système de formation selon l'une des revendications 18 à 21, **caractérisé en ce qu'**il comporte un module d'enregistrement permettant d'enregistrer une action de l'apprenant (55) et **en ce qu'**il comporte des moyens permettant de comparer l'action enregistrée avec l'intention de l'apprenant (55) précédemment détectée afin de déterminer un indicateur de cohérence.

23. Système de formation selon l'une quelconque des revendications 21 ou 22, **caractérisé en ce que** le module pédagogique peut réorienter le déroulement de la session d'apprentissage en fonction des indicateurs de pertinence et/ou de cohérence.

24. Système de formation selon l'une quelconque des revendications 1 à 23, **caractérisé en ce qu'**il comprend une interface formateur (69) comportant des moyens d'observation (68) permettant au formateur (70) d'observer le déroulement d'une session de formation (56), de mesurer la progression de l'apprenant (55), de modifier le déroulement de la session de formation (56), de pouvoir interagir avec les objets du cadre de travail (51) et de communiquer avec l'apprenant (55).

25. Système de formation selon l'une quelconque des revendications précédentes, **caractérisé en ce qu'**il comprend plusieurs interfaces homme machine (54) et des moyens internes permettant d'exécuter en parallèle plusieurs sessions de formation (56) pour plusieurs apprenants (55).

26. Système de formation selon la revendication 25, **caractérisé en ce qu'**il comprend des moyens internes permettant à plusieurs apprenants (55) de collaborer au sein d'un même cadre de travail (51).

27. Méthode de construction d'une session de formation dans un environnement de réalité virtuelle mettant en oeuvre un système selon l'une quelconque des revendications 1 à 26, **caractérisée en ce qu'**elle comprend une construction interactive à l'aide du système d'un scénario (58) d'apprentissage.

28. Méthode de construction selon la revendication 27, **caractérisée en ce qu'**elle comprend une construction interactive à l'aide du système d'un cadre de travail (51).

29. Méthode de construction selon la revendication 28, **caractérisée en ce que** le cadre de travail (51) est construit de manière interactive, en effectuant, les opérations suivantes:
- sélection d'un objet (2),
- dimensionnement interactif de l'objet (2),
- positionnement interactif de l'objet (2) dans l'espace tridimensionnel,
- édition des caractéristiques non dimensionnelles de l'objet (2),
- répétition des opérations précédentes pour chaque objet (2) jusqu'à obtenir le résultat souhaité,
- sauvegarde de l'ensemble des objets et de leurs caractéristiques dans un fichier cadre de travail.

30. Méthode de construction selon une des revendications 27 à 29, **caractérisée en ce que** le scénario (58) d'apprentissage est construit en effectuant les opérations suivantes
- création interactive d'une séquence centrale d'actions en la réalisant,
- édition de la structure du graphe (31) pour modifier les enchaînements,
- édition éventuelle de compléments au scénario (58),
- sauvegarde du graphe (31) complet dans un fichier de scénario d'apprentissage.
